# EUROPÄISCHE PATENTSCHRIFT

(11) **EP 1 145 197 B1**
(45) Veröffentlichungstag und Bekanntmachung des Hinweises auf die Patenterteilung: **30.07.2003**
(21) Anmeldenummer: 99934477.3
(22) Anmeldetag: 11.05.1999
(51) Int. Cl.: G07C 1/00

(54) **SIGNALBETÄTIGBARES SCHLIESSSYSTEM FÜR TÜREN ODER TORE SOWIE VERFAHREN ZUM BETREIBEN EINES SOLCHEN**
CLOSING SYSTEM WHICH CAN BE ACTUATED BY A SIGNAL AND WHICH IS PROVIDED FOR DOORS OR GATES, AND A METHOD FOR OPERATING SUCH AS SYSTEM
SYSTEME DE FERMETURE ACTIONNABLE PAR SIGNAL POUR PORTES OU PORTAILS, AINSI QUE PROCEDE POUR SON FONCTIONNEMENT

(30) Priorität: 15.05.1998 DE 19821998
(43) Veröffentlichungstag der Anmeldung: 17.10.2001
(73) Patentinhaber: Hörmann KG Antriebstechnik, 33790 Halle i. Westfalen (DE)
(72) Erfinder: HÖRMANN, Thomas, J., D-66606 St. Wendel (DE)
(74) Vertreter: Flügel, Otto, Dipl.-Ing.
(86) Internationale Anmeldenummer: DE9901425
(87) Internationale Veröffentlichungsnummer: WO99060530

(56) Entgegenhaltungen:
- EP-A- 0 651 119
- DE-A- 19 625 588
- US-A- 5 148 159
- US-A- 5 563 600

## Beschreibung

Die Erfindung betrifft ein signalbetätigbares Schließsystem nach dem Oberbegriff des Anspruchs 1. Außerdem betrifft die Erfindung ein Verfahren zum Betreiben eines solchen Schließsystems, nach dem Oberbegriff des beigefügten Anspruchs 12. Ein solches Schließsystem und ein solches Verfahren sind aus der EP-A-0 651 119 bekannt, auf die weiter unten noch näher eingegangen wird.

Signaibetätigbare Schließsysteme mit einem einprogrammierbaren Berechtigungscode sind bei z.B. mittels Handsendern ferngesteuerten Garagentoren weit verbreitet.

Selbstverständlich sind solche Systeme nicht auf das sehr bequeme Öffnen eines Garagentors vom Fahrerplatz aus beschränkt, mit solchen Fernbedienungen können auch ferngesteuert z.B. automatische Tür- oder Torschlösser ferngesteuert ver- oder entriegelt werden (prinzipiell sind sie überall dort denkbar, wo auch ein mechanisches Schlüssel-Schloßsystem einsetzbar wäre).

Ein von einem Handsender gesendeter Signalcode (Berechtigungscode, der die Zugangs- oder Zufahrtsberechtigung einer den Handsender besitzenden Person anzeigt) ist meist eine digitale Bitfolge, die oft werkseitig vorgegeben und in entsprechenden Speichereinrichtungen in dem Empfänger, d. h. der Empfangseinrichtung, und in dem Handsender, d. h. der Sendeeinrichtung, eingespeichert sind.

Wie bei mechanischen Schlüsseln bestehen auch bei diesen meist als Bitfolgen vorliegenden elektronischen Schlüsseln oder Berechtigungscodes vergleichbare Probleme. Zum einen kann es lästig sein, wenn man berechtigte Person für mehrere elektronisch betätigbare Türen oder Tore ist und für jede von ihnen einen gesonderten Handsender benötigt. Zum anderen können auch Handsender verloren gehen, oder man ist sich aus anderen Gründen unsicher, ob nicht auch unbefugte Personen Zugang zu dem werkseitig vorgegebenen Berechtigungscode haben. Für solche Fälle hat man bereits bestehende Schließsysteme so aufgebaut, daß die Sende- und die Empfangseinrichtung auf einen neuen Berechtigungscode einstellbar sind, d.h. die Einrichtungen einen neuen Berechtigungscode erlernen können oder mit anderen Worten, ein neuer Berechtigungscode in die Sende- und die Empfangseinrichtung einprogrammierbar ist. Soll ein anderer als der werkseitig vorgegebene Berechtigungscode verwendbar sein, so ist dies nur da möglich, wo die Sende- und die Empfangseinrichtung auf einen neuen Berechtigungscode einstellbar sind, d.h. die Einrichtungen einen neuen Berechtigungscode erlernen können oder mit anderen Worten, ein neuer Berechtigungscode in die Sende- und die Empfangseinrichtung einprogrammierbar ist. Soll ein anderer als der werkseitig vorgegebene Berechtigungscode verwendbar sein, so ist dies nur da möglich, wo die Sende- und die Empfangseinrichtung programmierbar sind.

Bei dem Stand der Technik nach der DE 43 38 114 C1 , die ein für ein Kraftfahrzeug bestimmtes Schließsystem betrifft, werden dagegen die Sendeeinrichtungen bereits von ihrem Hersteller werksseitig fest vorprogrammiert. Lediglich die unter Umständen woanders produzierte Empfangseinrichtung ist zum Einstellen auf neue Sendeeinrichtungen erstmals oder im Ersatzteilfall programmierbar, was nur vom Kraftfahrzeughersteller oder einer Werkstatt durchzuführen ist Für die Erst- oder Umprogrammierung der Empfangseinrichtung ist eine Programmierhilfseinrichtung nötig, mittels der ein besonderer Autorisierungscode, der die Berechtigung, eine Codeprogrammierung einzuleiten, an den Empfänger geleitet wird. Zusätzlich dazu wird für eine Programmierung der Empfangseinrichtung nur eine bestimmte Anzahl von Programmierungen bzw. nur eine bestimmte Zeitspanne vorgegeben.

Ein Beispiel für ein prinzipiell auch benutzerseitig umprogrammierbares Schließsystem - insbesondere ebenfalls für Kraftfahrzeuge - ist aus der WO 90/15211 A1 bekannt. Dabei wird zur Umprogrammierung einer mobilen Sendeeinrichtung in Form eines Schlüssels mittels einer speziellen Programmiereinrichtung zunächst der Code im Schlüssel geändert, wobei der Ursprungscode ebenfalls gespeichert bleibt. Der neue Code wird dann zur Emp-fangseinrichtung (z.B. in einer auf die Zündung des Kraftfahrzeuges wirkende Wegfahrsperre) gesendet und von dieser unter der Voraussetzung als neuer Code übernommen, wenn gleichzeitig, d.h. beim gleichen Abfragevorgang der Ursprungscode als gültig anerkannt wird. Für eine zusätzliche Absicherung der Datenübertragung wird eine Datenverschlüsselung vorgenommen. Diese bekannte Art der Umprogrammierung bietet zwar eine hohe Manipulationssicherheit, ist jedoch für einen normalen Endbenutzer zu kompliziert. Zur Umprogrammierung der Sendeeinrichtung muß nämlich stets die getrennt vorgesehene Programmiereinrichtung vorhanden und zusätzlich dazu noch der Ursprungscode in die Programmiereinrichtung eingegeben werden und daher dem Benutzer auch bekannt sein.

Eine Programmierbarkeit ist auch insbesondere für solche Fälle sinnvoll, wenn mehr Personen als bisher für ein Tor eine Passiergenehmigung erhalten sollen und deshalb eine oder mehrere neue Sendeeinrichtungen hinzugefügt werden sollen. Es würde einen immensen Aufwand bedeuten, wenn der Hersteller für alle solche Fälle den werkseitig für die Empfangseinrichtung vorgegebenen Berechtigungscode in jeder hinzuzufügenden Sendeeinrichtung neu generieren müßte. Deswegen ist es vorteilhaft, wenn zumindest die Sendeeinrichtungen lernfähig sind, also einen vorhandenen Berechtigungscode durch Einprogrammierung in einem Lernvorgang erlernen können.

Bei solchen Einprogrammierungen in Sende- oder Empfangseinrichtungen wird der vorhandene Berechtigungscode identisch kopiert. Beispielsweise könnte ein neuer Sender in einem Programmierbetrieb den Berechtigungscode von einem bereits vorhandenen Sender lernen. Der neue Sender ist dann identisch wie der alte Sender zu gebrauchen und könnte auch weiterhin seinen gespeicherten Berechti-gungscode weitergeben. Solche Systeme sind zum Beispiel ohne weiteres sinnvoll bei Privatgaragen, zu denen nur die Mitglieder einer Familie Zufahrt haben. Kommt ein Familienmitglied als neue berechtigte Person - z.B. nach Neuerwerb eines Führerscheins - hinzu, so braucht nur ein neuer Handsender gekauft zu werden, der dann identisch den alten Berechtigungscode erlernt.

Im Bild des Schlüssels gesehen stellen die bisher verwendeten Berechtigungscodes einfache Schlüssel dar, solche einfachen Schlüssel können von jedem Schlossereibetrieb ohne weiteres dupliziert werden - noch einfacher geht bei manchen Handsendern die Duplizierung des Berechtigungscodes.

Oft stellt aber gerade dann, wenn mehrere Parteien Zugang zu einem durch die Tür oder das Tor abgeschlossenen Bereich haben sollen, wie beispielsweise bei einer Tiefgarage, in der alle Bewohner einer Wohnanlage ihre Stellplätze haben, ein solches Schließsystem ein nicht kalkulierbares Sicherheitsrisiko dar. Jeder Bewohner könnte sich in unbeschränkter Zahl passende Sender kaufen und mit seinem eigenen Sender eine unbeschränkte Anzahl von einen Zugang in die Tiefgarage bietenden Sendeeinrichtungen durch Duplizieren des Berechtigungscodes besorgen. Außerdem könnte eine Sendeeinrichtung verloren gehen. Mit einer solchen Sendeeinrichtung könnte eine unbefugte Person sich nicht nur Zugang zu der Tiefgarage beschaffen, sondern eventuell sogar bei programmierbaren Systemen den Berechtigungscode ändern, so daß nur noch die unbefugte Person Zutritt hat und die Handsender der eigentlich berechtigten Personen gar nicht mehr funktionieren.

Aus der DE 196 25 588 A1 ist ein signalbetätigbares Schließsystem für Garagentore bekannt, das ebenfalls die Merkmale des Oberbegriffs des beigefügten Anspruchs 1 aufweist. Die DE 196 25 588 A1 sieht dabei als Programmiereinrichtung einen Sicherheitssender vor, mit dem Codes auf Normalsender vererbbar sind. Dieser Sicherheitssender (Master-Sender) kann eine Koplerkennung aussenden, die aber nicht mitkopiert wird. Vielmehr wird beim Einlernen eine Überprüfung auf Vorhandensein eines Zusatzsignales durchgeführt, welches nur von dem Sicherheitssender ausgesendet wird, welches aber die Struktur und das Erkennen des Berechtigungscodes nicht beeinträchtigt. Das von dem als Programmiereinrichtung wirkenden Sicherheitssender abgestrahlte Signal enthält also einen Signalbestandteil, der von der Empfangseinrichtung des Schließsystems als ein den Code nicht verändernder Bestandteil ignoriert wird. Er wird zwar in einer Empfangssignalverarbeitungseinheit der Sendeeinrichtung als Berechtigung zum Vererben des Berechtigungscodes erkannt, jedoch nicht als Bestandteil des Berechtigungscodes in der Sendeeinrichtung gespeichert

Aus der eingangs genannten EP 0 651 119 A1 ist ein signalbetätigbares Schließsystem sowie ein Verfähren zum Betreiben eines solches nach den Oberbegriffen der beigefügten unabhängigen Ansprüche bekannt Das bekannte Schließsystem umfasst eine als Garagentorhandsender ausgebildete Sendeeinrichtung. Auch bei diesem bekannten Schließsystem ist es bekannt, einen Lemstatus vorzusehen, der mit dem Berechtigungscode mitgesendet wird. Dieser Lernstatus zeigt an, ob der Berechtigungscode gelernt werden darf oder nicht. So kann eine Sendeeinrichtung als reine Sendeeinrichtung - Normalsender - oder als Lern- und Lehrsender - d. h. als Sendeeinrichtung und Programmiereinrichtung eingestellt werden. Hierzu hat jede Sendeeinrichtung einen versteckten Zuschaltknopf, dessen Einstellung nicht reversierbar ist In einem konkreten Ausführungsbeispiel ist dies ein Lernstatusschalter in Form einer durchschneidbaren Leiterschleife. Bleibt die Leiterschleife geschlossen, ist der Sender als Programmiereinrichtung verwendbar und gibt ein zu dem Berechtigungscode hinzugefügtes Bit ab, das zeigt, daß der Berechtigungscode gelernt werden darf.

Dieses zusätzliche Bit wird zwar beim Programmieren von den zu programmierenden Sendeeinrichtungen zum Überprüfen, ob der Berechtigungscode eingelernt werden darf oder nicht, erkannt, bei der Einspeicherung selbst aber nicht beachtet.

Erfindungsgemäß wird dagegen ein Schließsystem mit den Merkmalen des beigefügten Anspruchs 1 und ein Verfahren mit den Schritten des beigefügten Anspruchs 12 vorgeschlagen.

Das erfindungsgemäße signalbetätigte Schließsystem umfasst eine Programmlereinrichtung, die zum Vererben (Weitergeben oder Einprogrammieren) des Berechtigungscodes in die Sende- oder die Empfangseinrichtung einen Sicherungscode mit einer Kopierkennung in einem Originalzustand gespeichert hat, eine der zu programmierenden (oder der lernenden) Sende- oder Empfangseinrichtung zugeordnete Sicherungscodeerkennungseinrichtung, die in dem Programmierbetrieb den Sicherungscode mit der Kopierkennung erkennt und ein Erlernen oder Einprogrammieren des Berechtigungscodes durch Kopieren des Sicherungscodes nur zuläßt, wenn die Kopierkennung in dem Originalzustand ist, eine Kopiercodeänderungseinrichtung, die beim Kopieren die Kopierkennung des Sicherungscodes von dem Originalzustand in einen einen kopierten Sicherungscode anzeigenden Kopierzustand ändert und den kopierten Sicherungscode als den Berechtigungscode zum Einlernen in der Sende- bzw. der Empfangseinrichtung liefert.

Dadurch ist ein System geschaffen worden, das mit speziellen kopiergeschützten oder genauer nur einfach kopierbaren Berechtigungscodes arbeiten kann, die als Sicherungscodes bezeichnet werden. Die Programmierung mit solchen Sicherungscodes ist nur mit der Programmiereinrichtung möglich, denn nur sie ist dazu fähig, die Sicherungscodes an andere Komponenten des Schließsystems mit der Kopierkennung im Originalzustand zu liefern. Dabei kann eine Komponente - also z.B. eine Empfangseinrichtung, die nur programmierbar ist, nicht aber dazu gebracht werden kann, ihren eingespeicherten Berechtigungscode abzusenden oder preiszugeben, - also nur lernen aber nicht vererben kann - auch den Sicherungscode im Originalzustand eingespeichert haben. Insbesondere bei Komponenten, die den Berechtigungscode weitergeben oder vererben können, sorgt die Kopiercodeänderungseinrichtung für eine Änderung des Kopiercodes des Sicherungscodes, so daß diese Komponenten nur einen als solchen erkennbaren kopierten Sicherungs-code als Berechtigungscode aufweisen. Wird versucht, mit einem solchen kopierten Sicherungscode eine Neuprogrammierung durchzuführen, so erkennt die zu programmierende Sende- oder Empfangseinrichtung aufgrund der ihr zugeordneten Sicherungscodeerkennungseinrichtung, daß es sich um einen kopierten Sicherungscode handelt und verweigert sich, in den Programmierbetrieb einzutreten oder diesen zu vervollständigen, oder bricht einen begonnenen Lernvorgang ab.

Mit dem kopierten Sicherungscode kann ohne weiteres der Normalbetrieb, d.h. signalbetätigtes Öffnen und Schließen oder Ver- oder Entriegeln der Tür oder des Tores durchgeführt werden. Ein Vervollständigen eines Programmierbetriebs ist damit aber unmöglich. Es ist also nicht möglich, die kopierten Sicherungscodes weiterzuvererben.

Dennoch muß nicht jedesmal, wenn ein neuer Berechtigungscode eingestellt werden soll oder eine weitere Sendeeinrichtung hinzugefügt werden soll, der Hersteller angesprochen werden, denn eine Programmierung kann ja mit der Programmiereinrichtung, die an einem sicheren Ort, z.B. beim Hausmeister aufbewahrt werden kann, durchgeführt werden.

Vorteilhafte Ausgestattungen der Erfindung sind in den Unteransprüchen angegeben.

Die Erfindung betrifft in bevorzugter Ausführung ein signalbetätigbares Schließssystem für ein kraftbetätigtes Garagen- oder Zufahrtstor und ein Verfahren zum Betreiben eines solchen Schließsystems. In besonders bevorzugter Ausführung ist bei diesem Schließsystem bzw. Verfahren die Zutritts- oder Zufahrtsberechtigung durch Fernübertragung des Signalcodes nachweisbar, wobei die Sendeeinrichtung, mittels welcher der Signalcode gesendet werden kann, weiter bevorzugt eine mobile Sendeeinrichtung ist.

Zum Beispiel ist es manchmal erwünscht, daß das erfindungsgemäße Schließsystem zu bereits vorhandenen Schließsystemen kompatibel ist. Es könnte zum Beispiel auch sein, daß ein Tor mit dem erfindungsgemäßen Schließsystem betätigt werden soll, das eine Zufahrt zu mehreren ihrerseits mit signalbetätigbaren Schließsystemen versehenen Einzelgaragen abschließt. In einem solchen Fall sind sozusagen ein besonders sicherheitsempfindlicher Generalberechtigungscode für das Zufahrtstor und zusätzlich aber mehrere Zweitberechtigungscodes für die Einzelgaragen notwendig, die unter Umständen leicht von den Einzelgaragenbenutzern ohne Hinzuziehen der Hausverwaltung änderbar sein sollen. Andererseits kann es in Einzelfallen wünschenswert sein, zunächst nur eine einfache Duplizierbarkeit des Berechtigungscodes vorzusehen, wobei die Schließanlage oder das Schließsystem aber später ohne großen Aufwand mit den Sicherungscodes betreibbar sein soll.

Für solche Fälle ist bei einer besonders vorteilhaften Ausgestaltung der Erfindung vorgesehen, daß die Sicherungscodeerkennungseinrichtung zum Unterscheiden des Sicherungscodes von einem frei kopierbaren Normalcode fähig ist und ein Erlernen oder Einprogrammieren des Berechtigungscodes in dem Programmierbetrieb durch identisches Kopieren eines Normalcodes ohne Kopierkennungserfassung zuläßt. Anstelle des oder zusätzlich zu dem Sicherungs-code kann also auch ein frei kopierbarer Normalcode verwendet werden. Die Sicherungscodeerkennungseinrichtung erkennt, ob es sich bei dem einzulernenden Signalcode um einen Normalcode oder einen Sicherungscode handelt. Handelt es sich um einen Normalcode, so wird er, ohne auf eine besondere Kopierkennung zu achten, identisch dupliziert. Handelt es sich um einen Sicherungscode, überprüft die Sicherungscodeerkennungseinrichtung die Kopierkennung und läßt, wenn die Kopierkennung einen anderen als den Originalzustand anzeigt, ein Erlernen des einzuprogrammierenden Codes (kopierten Sicherungscodes) nicht zu.

Die Erfindung ist insbesondere geeignet für Schließsysteme, bei denen die normalen Sendeeinrichtungen, die zum Öffnen des Tores oder dergleichen verwendet werden, auch in einfacher Weise einen Berechtigungscode in einem nicht sicherheitsrelevanten Fall in unkomplizierter Weise weitergeben können. Für solche Fälle werden bevorzugt die Normalcodes verwendet, die einfach kopierbar sein sollen. Für sicherheitsrelevante Fälle werden bevorzugt die Sicherungscodes verwendet. Liegt ein Sicherungscode vor - der so etwas ähnliches darstellt wie ein Sicherungsschlüssel, der nur unter Vorlage des passenden Sicherungsschein kopiert werden darf - so soll ein Weitergeben des Berechtigungscodes auf diese einfache bei Normalcodes erwünschte Weise verhindert werden.

Diese Funktionen sind gemäß einer besonders vorteilhaften Ausgestaltung der Erfindung dadurch erzielbar, daß die Kopiercodeänderungseinrichtung der Sendeeinrichtung (d.h. z.B. einem Normalsender) zugeordnet ist, welche eine Programmierfunktion aufweist zum Weitergeben ihres Berechtigungscodes, wenn er als Normalcode vorliegt, an eine weitere Sendeeinrichtung und/oder die oder eine weitere Empfangseinrichtung durch identisches Kopieren des Normalcodes in die weitere Sendeeinrichtung bzw. in die Empfangseinrichtung oder die weitere Empfangseinrichtung. Der zum Programmieren von weiteren Einrichtungen fähige Sendeeinrichtung ist also die Kopiercodeänderungseinrichtung zugeordnet, die dafür sorgt, daß die Sendeeinrichtung stets nur Sicherungscodes mit der Kopierkennung in dem Kopierzustand, also kopierte Sicherungscodes einprogrammiert bekommt. In der Programmierfunktion kann diese Sendeeinrichtung demgemäß auch nur einen kopierten Sicherungscode weitergeben, deren Annahme durch die der weiteren Sendeeinrichtung oder der Empfangseinrichtung zugeordnete Sicherungscodeerkennungseinrichtung verweigert wird. Ist die zur Programmierfunktion fähige Sendeeinrichtung mit einem Normalcode als Berechtigungscode programmiert, so kann sie diesen auch ohne Einschränkung an andere Komponenten weitergeben, da bei einem Normalcode weder die Sicherungcodeerkennungseinrichtung noch die Kopiercodeänderungseinrichtung aktiv werden.

Das eben Erläuterte ist natürlich auch entsprechend in einem (weniger bevorzugten) Fall anwendbar, bei dem eine Empfangseinrichtung eine Programmierfunktion zum Weitergeben des in ihr gespeicherten Berechtigungscodes aufweist. In solch einem Fall, bei dem nicht die Sendeeinrichtung, sondern die Empfangseinrichtung zum einfachen Weitergeben von Normalcodes benutzt werden soll, muß die oder eine zusätzliche Kopiercodeänderungseinrichtung der Empfangseinrichtung zugeordnet sein, so daß diese Empfangseinrichtung Sicherungscodes nur mit der Kopierkennung gebrandmarkt, also nur kopierte Sicherungscodes eingespeichert hat und auch nur als solche weitergeben kann.

Die Programmierfunktion ist vorzugsweise von einer Bedienperson durch Tastendruck oder dergleichen Betätigung einleitbar. Hierzu könnte die zum Vererben von Normalcodes fähige Sende- oder Empfangseinrichtung - z.B. versteckt im Inneren - eine Betätigungseinrichtung, beispielsweise eine Taste oder dergleichen oder eine Schaltung, die auf einen bestimmte Bedienabfolge und äußere Einflüsse reagiert, aufweisen, mittels der eine Programmierfunktion einleitbar ist. In der so eingeleiteten Programmierfunktion kann die vererbende Einrichtung ihren Berechtigungscode an andere Einrichtungen weitergeben oder vererben.

Bevorzugt ist eine Ausführung der Erfindung, bei der die Programmiereinrichtung ein Sicherungssender ist, der den Sicherungscode im Programmierbetrieb an die zu programmierende Sende- oder Empfangseinrichtung z.B. über Funk sendet. Der Sicherungssender weist gemäß einer weiteren vorteilhaften Ausgestaltung der Erfindung zusätzlich zu seiner Fähigkeit, die Sicherungscodes zu vererben, auch die gleichen Funktionen wie die Sendeeinrichtung auf, so daß sie auch z.B. als Handsender zum Öffnen eines Tores verwendbar ist. Vorzugsweise ist der Sicherungssender dabei aber nicht lernfähig, obwohl aber auch eine Ausführung denkbar ist, bei der der Sicherheitssender genauso wie ein Normalsender Normalcodes und Original-Sicherungscodes als kopierte Sicherungscodes erlernen kann.

Wegen des kompakten Aufbaus und der einfachen Bedienbarkeit ist weiter bevorzugt, daß die wenigstens eine Sendeeinrichtung wenigstens einen Handsender, insbesondere einen Handfunksender umfaßt, der die Sicherungscodeerkennungseinrichtung und die Kopiercodeänderungseinrichtung umfaßt und eine Speichereinrichtung mit einem oder mehreren Speicherplätzen zum Einspeichern eines oder mehrerer als kopierter Sicherungscodes oder als Normalcodes vorliegender Signalcodes aufweist, wobei der jeweilige Speicherplatzinhalt durch Tastendruck oder dergleichen Betätigung zum Senden für einen Normalbetrieb oder für den Programmierbetrieb abrufbar ist. Besonders vorteilhaft ist eine Ausführung mit mehreren Speicherplätzen, die mit verschiedenen Berechtigungscodes belegt werden können. Beispielsweise könnte der Handsender vier Tasten und entsprechend der möglichen Tastenkombinationen - wobei aus praktischen Gründen bei Normalsendern nur höchstens jeweils zwei Tasten gemeinsam gedrückt werden sollen - zehn Speicherplätze aufweisen. Damit können dann zehn Berechtigungscodes für zehn Tür- oder Torsysteme oder z.B. ein Tor und neun Zusatzfunktionen zum Bedienen durch diesen einzigen Sender programmiert werden, wobei die Berechtigungscodes bei Normalsendern als kopierte Sicherungscodes oder als frei kopierbare Normalcodes vorliegen können.

Sicherungscodes und Normalcodes sind einfach realisier- und unterscheidbar, wenn der Sicherungscode eine Bitfolge aufweist, die aus wenigstens einem bestimmten Bit als Sicherungscodekennung zum Anzeigen des Sicherungscodes und wenigstens einem weiteren bestimmten die Kopierkennung bildenden Bit sowie einem Restcode, der vom Empfänger zur Identifikation zum Auslösen des Schaltsignals verwendbar ist, gebildet ist. Gibt das die Sicherungscodekennung bildende Bit z.B. den Zustand "1" an, handelt es sich z.B. um einem Sicherungscode. Das als Kopierkennung benutzte Bit gibt dann an, ob es sich um einen Originalsicherungscode oder einen kopierten Sicherungscode handelt. Natürlich kann für diese Kennungen auch eine größere Bitfolge verwendet werden. Damit könnten dann auch Sicherungscodes verschiedenen Ranges angezeigt werden, so daß Kopierberechtigungen mit niedrigen und höheren Rängen entsprechend des Sicherheitsranges des durch das Schließsystem abzuschließenden Raumes mit verschieden zugänglichen Arten von Programmiereinrichtungen nachweisbar sind.

Soll der Sicherungscode aus irgendeinem Grund ab und an geändert werden, so ist es vorteilhaft, wenn die Programmiereinrichtung einen Sicherungscodegenerator aufweist zum Erzeugen eines neuen Sicherungscodes. Ein solcher Sicherungscodegenerator könnte z.B. einen Zufallsgenerator aufweisen. Dies ist aber, da dann bei verschiedenen Systemen zufällig gleiche Bitfolgen als Berechtigungscodes vorliegen könnten, weniger bevorzugt. Besser ist es, eine bestimmte Bitanzahl werkseitig fest vorzugeben, wobei vorzugsweise jeder Code nur ein einziges Mal vergeben wird (entsprechend groß sollte die Bitanzahl sein). Ein weiterer Teil des Codes könnte dann durch den Sicherungscodegenerator veränderbar gehalten werden. Vorzugsweise enthält der Sicherungscodegenerator hierzu eine Zähleinrichtung, die bei Betätigung z.B. mittels einer Taste von dem ursprünglichen Teil oder dem Komplement desselben in bestimmten Schritten auf- oder abwärts zählt. Wird die Betätigung beendet, enthält die Zähleinrichtung eine quasi zufällige Zahl - entsprechend der Betätigungsdauer, die bei entsprechend schnellem Zählen nahezu nie gleich ist - welche dann als der veränderbare Teil dem einzigartigen, fest vorgegebenen Teil hinzugegeben wird. Eine weitere Möglichkeit, den Sicherungscodegenerator zu realisieren, wäre, mehrere verschiedene Bitfolgen als veränderlichen Teil des Sicherungscodes fest auf Speicherplätzen zu speichern. Durch Tastendruck oder dergleichen Betätigung wird dann der Speicherplatzinhalt, der der Tastenkombination entspricht, dem fest vorgegebenen einzigartigen Codeteil hinzugefügt, d.h. der vorherige entsprechende variable Teil wird durch den Speicherinhalt des angewählten Speicherplatzes überschrieben.

Bei solchen Veränderungen des Sicherungscodes könnte es aber aus irgendeinem unwahrscheinlichen Grund zu Fehlfunktionen kommen, so daß die Programmiereinrichtung bereits den neuen Sicherungscode aufweist, die übrigen zu programmierenden Komponenten aber noch nicht. Um die Programmierberechtigung nachzuweisen, wird z.B. oft zunächst der alte Berechtigungscode übermittelt und die Übereinstimmung überprüft, bevor ein neuer Sicherungscode eingelernt wird. Dies wäre in einem solchen Fall nicht mehr möglich. Eine Beendigung eines durch fehlgeschlagene Änderung des Sicherungscodes verursachten Kommunikationsproblems ist gemäß einer weiter bevorzugten Ausführungsform der Erfindung einfach dann möglich, wenn die Programmiereinrichtung weiter einen Festspeicher, in welchem der ursprünglich vorgegebene Sicherungscode gespeichert ist, und eine Reseteinrichtung zum Rückstellen der Programmiereinrichtung auf diesen ursprünglichen Sicherungscode aufweist. Bei der Ausführung mit einer Zähleinrichtung könnte z.B. einfach die Zählgeschwindigkeit, Schrittfolge und Funktion derart gestaltet sein, daß bei einer Betätigung über eine bestimmte Zeitspanne (z.B. länger als 10 sec.) hinaus der alte Wert wieder erreicht wird und als dem einzigartigen Codeteil hinzuzufügender Teil ausgegeben wird.

Bevorzugt besteht also der Restcode aus einer großen Anzahl (z.B. 10, 20, 30 Bits oder mehr) werkseitig einzigartig vorbelegter Bits und einer kleineren Anzahl (2, 3 oder mehr) durch den Sicherungscodegenerator veränderbarer und vorzugsweise wieder auf den ursprünglichen Wert bringbarer Bits. Ist der Sicherungscodegenerator durch eine Speichereinrichtung mit mehreren Speicherplätzen gebildet, von denen Bitfolgen für die veränderbaren Bits abrufbar sind, kann ein Rückstellen auf den ursprünglichen Wert natürlich ganz einfach durch Aufrufen des entsprechenden Speicher erfolgen. Zwar ist bei einem solchen Sicherungscodegenerator die Anzahl erzeugbarer Sicherungscodes auf die Anzahl der Speicherplätze begrenzt, dies ist aber in der Regel ausreichend. Außerdem sind die Speicherplatzinhalte vom Hersteller dokumentierbar, so daß bei Bedarf Repliken hergestellt werden können.

Ausführungsbeispiele der Erfindung werden nachstehend anhand der beigefügten Zeichnung näher erläutert. Darin zeigt:
- Fig. 1: ein schematisches Schaubild zur Darstellung des Funktionsprinzip einer Ausführungsform eines signalbetätigbaren Schließsystems,
- Fig. 2: ein schematisches Schaubild zur Darstellung von von dem signalbetätigten Schließsystem nach Fig. 1 verwendeten Berechtigungscodes,
- Fig. 3: ein Flußdiagramm, das den Ablauf eines Lernvorgangs während eines Programmierbetriebes zum Einprogrammieren von Berechtigungscodes in Komponenten des signalbetätigten Schließsystems von Fig. 1 verdeutlicht,
- Fig. 4: eine schematische Darstellung einer Privatgarage mit einem fernsteuerbaren Garagentor als ein erstes Anwendungsbeispiel für das signalbetätigbare Schließsystem,
- Fig. 5: eine schematische Darstellung einer Tiefgarage mit mehreren Stellplätzen mit einem fernsteuerbaren Garagentor als ein zweites Anwendungsbeispiel für das signalbetätigbare Schließsystem, und
- Fig. 6: eine schematische Darstellung eines mehrere Privatgaragen mit je einem fernsteuerbaren Garagentor aufweisenden Hof mit einem ebenfalls fernsteuerbaren Abschluß- oder Hoftor als ein drittes Anwendungsbeispiel für das signalbetätigbare Schließsystem.

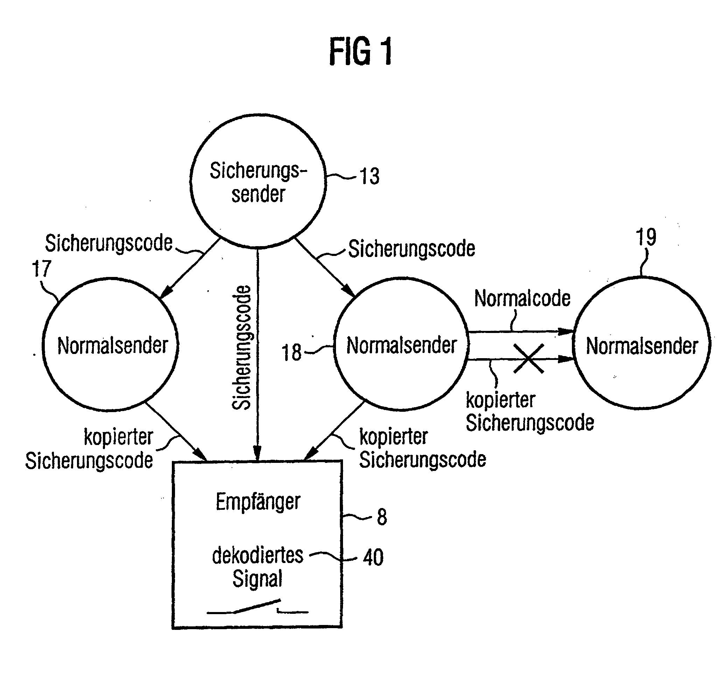

Fig. 1 zeigt einen Prinzipaufbau von hier interessierenden Komponenten eines Schließsystems. Das Schließsystem weist im wesentlichen einen Sicherungssender 13, mehrere Sendeeinrichtungen in Form von Normalsendern 17, 18 und 19 und eine Empfangseinrichtung in Form eines Empfängers 8 auf.

Das Schließsystem arbeitet im wesentlichen mit drei Arten von Signalcodes als Berechtigungscodes. Solche Berechtigungscodes bilden sozusagen eine Art "elektronische Schlüssel". Soll eine an den Empfänger angeschlossene Einheit wie beispielsweise ein Motor eines Torantriebes ferngesteuert werden, so betätigt man einen der Normalsender z.B. 17, der den Berechtigungscode an den Empfänger 8 sendet. Dieser überprüft den Berechtigungscode und gibt bei dem passenden Berechtigungscode ein Schaltsignal 40 ab, das dem decodierten Berechtigungscode entspricht.

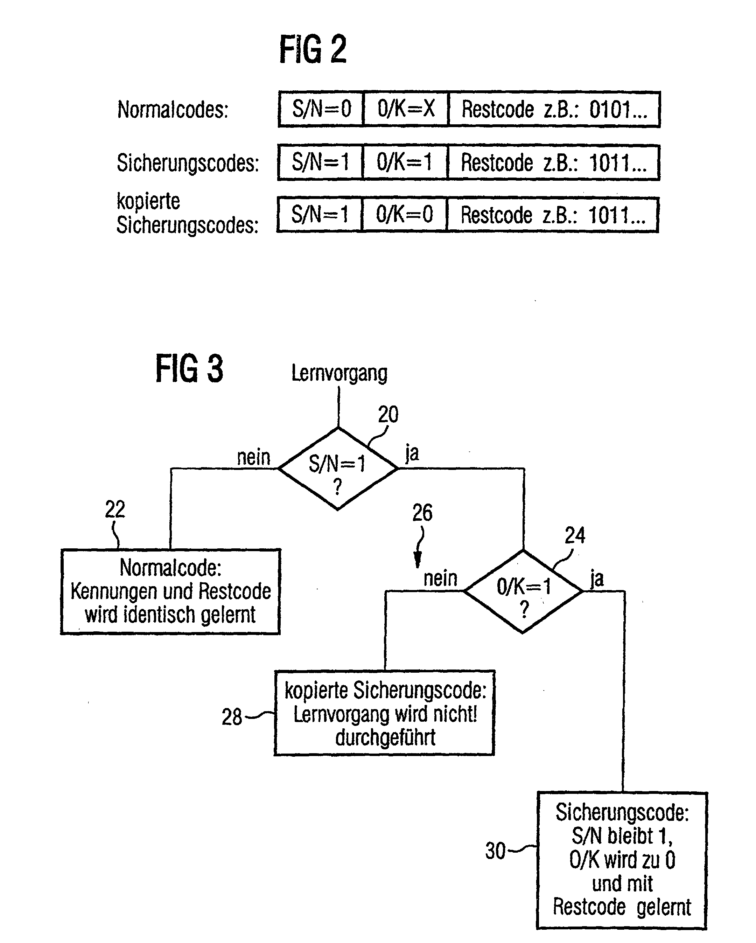

Die drei Arten von Berechtigungscodes oder Signalcodes sind in Fig. 2 näher dargestellt. Wie in Fig. 2 gezeigt, benutzt das Schließsystem Bitfotgen als Signalcodes oder Berechtigungscodes. Die Codelängen betragen, um entsprechende Sicherheiten zu bieten, z.B. jeweils mehr als 20 Bits, von denen der weitaus größte Teil jeweils als variabler Restcode verwendet werden und wenigstens 2 Bits zur Kennung der Berechtigungscodeart dienen.

Bei Neuauslieferung des Schließsystems enthält es jeweils Restcodes, die werkseitig vom Hersteller erzeugt und eingespeichert worden sind. Bei dem hier dargestellten Beispiel kommen die Codes nur über die Sender 17 - 19, 13 in Verkehr. D.h. werkseitig sind die den Restcode der Sender darstellenden Bits voreingestellt. Der Hersteller vergibt dabei für den weitaus größten Teil der Bits fortlaufend einzigartige Codes entsprechend der bei den Sendern zur Verfügung stehenden Speicherplätze.

Beispielsweise würde ein erster Sender eines ersten Systems mit 10 Speicherplätzen für verschiedene Codes die Codes 1 - 10 erhalten, ein zweiter Sender eines zweiten Systems mit drei Speicherplätzen würde die Codes 11 bis 13 erhalten, ein Sender eines dritten Systems mit 10 Speicherplätzen erhält die Codes 14 bis 23 usw. Die bei dem Sicherungsender 13 werkseitig vergebene Restcodefolge wird vom Hersteller dokumentiert, um bei Bedarf Repliken herstellen zu können.

Neben diesen fest werkseitig vorgegebenen Bits, deren Anzahl so groß gewählt werden, daß eine Wiederholungsgefahr selbst bei großer Systemstückzahl nicht besteht, gibt es im Restcode auch noch eine bestimmte Anzahl veränderlicher Bits, die immer werkseitig auf einen bestimmten Wert festgelegt werden.

Der Restcode des Empfängers 8 ist bei der Auslieferung mit einem Wert (z.B. 0) vorbelegt, der zu keinem Code eines Senders paßt. Den passenden Restcode bekommt er erst nach Einbau mit Hilfe eines der Sender 17 - 19, 13 einprogrammiert.

Die Restcodes dienen dazu, das Schließsystem von anderen Schließsystemen zu unterscheiden, wobei wegen ihrer einzigartigen Vergabe sichergestellt ist, daß nur der berechtigte Normalsender 17, 18 oder 19 die für den Empfänger 8 passende Bitfolge aufweist. Der Restcode wird vom Empfänger 8 zur Identifikation und Dekodieren des Berechtigungscodes zum Erzeugen des entsprechenden Schaltsignals 40 benutzt. Vom Normalsender 17 oder 18 auf den Empfänger 8 übertragen, löst er so das Schaltsignal 40 zum Beispiel zum Öffnen eines Garagentores oder zum Ausführen anderer gewählter Funktionen, aus.

Die übrigen beiden, nicht zum Restcode gehörenden Bits dienen als Sicherungscodekennung S/N und als Kopierkennung O/K. Beträgt das Bit, das die Sicherungscodekennung SIN darstellt, 1, so handelt es sich gemäß dem gezeigten Ausführungsbeispiel bei dem entsprechenden Signalcode um einen Sicherungscode. Ist S/N gleich 0, so handelt es sich bei dem Signalcode um einen Normalcode. Bei einem Normalcode wird der Betrag des die Kopierkennung kennzeichnenden Bits O/K nicht beachtet (O/K=x). Liegt aber ein Sicherungscode vor, so bezeichnet O/K zum Beispiel gleich 1 einen Originalzustand des Sicherungscodes. In diesem Fall gibt O/K gleich 0 an, daß es sich um eine Kopie des Sicherungscode, d.h. einen kopierten Sicherungscode handelt. Das Schließsystem benutzt also Normalcodes, Sicherungscodes und kopierte Sicherungscodes.

Die in Fig. 1 gezeigten Normalsender 17, 18, 19 sind zum Beispiel Handfunksender, die ein Autofahrer mit sich führt, um ein Garagentor, zu dem er eine Zufahrtsberechtigung hat, von seinem Fahrersitz aus per Funksignal zu öffnen. Die Normalsender 17, 18, 19 enthalten neben den für solche Handfunksender üblichen einen Funkbetrieb ermöglichenden Einrichtungen noch folgende (nicht explizit dargestellte) Einrichtungen, die in einer integrierten Schaltung (Prozessor) in Form von in Hard- oder Software realisierten Schaltungen vorliegen: eine erste, programmierbare Speichereinrichtung mit mehreren Speicherplätzen zum Einspeichern von Berechtigungscodes, eine erste Sicherungscodeerkennungseinrichtung und eine erste Kopiercodeänderungseinrichtung, einen Codegenerator zum Erzeugen von Bitfolgen, einen ersten Festspeicher und eine Reseteinrichtung zum Einstellen der Speichereinrichtung auf einen Wert des Festspeichers. Der Codegenerator und die Reset
einrichtung bestehen im wesentlichen aus einer Zähl-einrichtung in Form eines Zählers, der bei Betätigung von dem im Festspeicher gespeicherten Wert solange auf- oder abwärtszählt, wie die Betätigung erfolgt oder bis nach einer bestimmten Zeit der Festwert wieder erreicht ist. Der in den Festwertspeicher gespeicherte Wert ist nichts anderes als der bestimmte Wert, der in der bestimmten Anzahl veränderlicher Bits im Restcode werkseitig festgelegt wird. Mittels des Codegenerators läßt sich genau diese Anzahl veränderlicher Bits zum Erzeugen eines neuen Normalcodes verändern, während der einzigartig vorbelegte übrige Teil des Restcodes unverändert bleibt. Hierauf wird später genauer eingegangen.

Der Sicherungssender 13 ist zum Beispiel ein spezieller Handfunksender. Er wird als Programmiereinrichtung zum Einprogrammieren von Sicherungscodes in die Normalsender 17, 18 oder in den Empfänger 8 benutzt. Der Sicherungssender 13 enthält neben den für Handfunksender für den Funkbetrieb üblichen Einrichtungen noch eine (nicht explizit dargestellte) zweite Speichereinrichtung, die ebenfalls in einer integrierten Schaltung (Prozessor) in Form einer mittels Soft- oder Hardware realisierten Schaltung vorliegt. Die zweite Speichereinrichtung weist mehrere Speicherplätze zum Speichern von Codefolgen für die veränderlichen Bits des Restcodes auf. Die Belegung dieser Speicherplätze erfolgt vom Werk aus und wird dort zum Bilden von Repliken bei Bedarf dokumentiert. Zum Abrufen der einzelnen Speicherplätze ist der Sicherungssender 13 zusätzlich mit Tasten versehen.

Der Empfänger 8 ist zum Beispiel ein mit einem Garagentorantrieb verbundener Funkempfänger und enthält neben den bei solchen Empfangseinrichtungen für den Funkbetrieb üblichen Einrichtungen noch eine (nicht explizit dargestellte) dritte, programmierbare Speichereinrichtung mit einem Speicherplatz zum Einspeichern eines Berechtigungscodes, die ebenfalls in einer integrierten Schaltung (Prozessor) in Form einer in Hard- oder Software realisierten Schaltung vorliegt.

Wie diese Einrichtungen aufgebaut sein müssen, wird im Lichte der nun folgenden Beschreibung eines Lernvorganges (eines Einprogrammiervorganges) für die Berechtigungscodes bei den Normalsendern 17 und 18 und bei der Empfangseinrichtung 8 klarer werden. In einem Programmierbetrieb des Schließsystems vererbt einer der Sender 13, 17, 18 den gespeicherten Berechtigungscode auf eine zu programmierende Komponente, also z.B. den Normalsender 19 oder den Empfänger 8, die zu programmierende oder lernende Komponente 8, 19 führt dabei in dem Programmierbetrieb den Lernvorgang durch.

Der Sicherungssender 13 selbst ist nicht lernfähig, sondern vererbt oder sendet oder erzeugt ausschließlich einzigartige Sicherungscodes. Diese Sicherungscodes sind vom Hersteller mit Hilfe der zweiten Speichereinrichtung vorprogrammiert. In einer weiteren Ausführungsform ist der Sicherungssender mittels eines zweiten Codegenerators - eines Sicherungscodegenerators - wie Normalsender bei Normalcodes auch in der Lage, neue und einzigartige Sicherungscodes zu erzeugen. Mit einer zweiten Reseteinrichtung können in einem solchen Fall die ursprünglichen in einem Festspeicher gespeicherten Signalcodes, also die werkseitig ursprünglich einprogrammierten Werte des Restcodes, wieder hergestellt werden.

Der Sicherungssender 13 dient dazu, die Sicherungscodes auf Normalsender, zum Beispiel auf die Normalsender 17 und 18 und auf den Empfänger 8 zu vererben oder einzuprogrammieren. Zusätzlich ist denkbar, daß der Sicherungssender 13 auch die gleichen Funktionen wie ein Normalsender aufweist, also als Handfunksender zum Betätigen eines Torantriebes einsetzbar ist oder auch zum Weitergeben von Normalcodes wie im folgenden dargelegt wird.

Die Normalsender 17, 18, 19 lernen Normalcodes und Sicherungscodes und können Normalcodes zum Beispiel auf einen weiteren Normalsender vererben, z.B. kann der Normalsender 18 seinen Normalcode auf den Normalsender 19 vererben. Mit Hilfe des Codegenerators können die Normalsender 17, 18, 19 auch neue Normalcodes erzeugen. Mit Hilfe der ersten Reseteinrichtung, d.h. durch Betätigen des Zählers des Codegenerators für genügend lange Zeit können wieder die ursprünglich gespeicherten Normalcodes hergestellt werden. Dabei werden stets nur die veränderlichen Bits des Restcodes verändert, während der vom Werk einzigartig vergebene Teil erhalten bleibt. Beispielsweise sind 6 Bits des Restcodes veränderbar. Diese werden z.B. ursprünglich vom Werk bei allen Sendern mit 0 vorbelegt. Dieser Wert wird auch in dem Festspeicher eingspeichert. Bei einer Neucodierung wird nur das Komplement dieser 6 Bits in den Zähler (in diesem Fall ein 6 Bit-Zähler, bei 8 veränderlichen Bits wäre es ein 8-Bitzähler usw.) geladen und solange dekrementiert, wie eine Neucodiertaste gedrückt wird. Wird diese Taste bis zum Ende einer bestimmten Zeitspanne gehalten, ist der werkseitig vorgegebene Wert wieder erreicht. Wird er früher losgelassen, so wird der augenblickliche Stand des Zählers, der quasi zufällig und ungleich dem Startwert ist, zusammen mit dem einzigartigen vorgegebenen, unveränderlichen Rest des Restcodes in den jeweiligen Speicherplatz eingespeichert.

Die Normalsender 17, 18, 19 senden erlernte Sicherungscodes stets nur als kopierte Sicherungscodes. Ein Erlernen eines solchen kopierten Sicherungscodes wird von ihnen verweigert.

Der Empfänger 8 lernt und dekodiert Normalcodes und Sicherungscodes und dekodiert einen kopierten Sicherungscode. In einer weiteren Ausführungsform wird ein Erlernen eines kopierten Sicherungscodes durch den Empfänger verweigert. In einer solchen Ausführung ist also auch der Empfänger 8 mit einer Sicherungscodeerkennungseinrichtung versehen. In der hier beschriebenen Ausführung ist der Empfänger 8 nicht dazu ausgelegt, Codes weiterzugeben. Es kommt deswegen ohne Kopiercodeänderungseinchting aus. Der Empfänger 8 kann deswegen auch einen kopierten Sicherungscode erlernen, kommt also auch ohne Sicherungscodeerkennungseinrichtung aus.

Wie ein Einprogrammieren des Berechtigungscodes in einen Normalsender im Fall des Vorliegens eines Normalcodes von statten geht, wird im folgenden anhand der Fig. 3 beschrieben. Ein Lernvorgang wird zum Beispiel durch Betätigung einer Taste am vererbenden Normalsender 18 eingeleitet, um den Normalsender 19 mittels eines Funksignals neu zu programmieren. Dabei wird der Berechtigungscode, der weitergegeben werden soll, durch Auswahl des entsprechenden Speicherplatzes der ersten Speichereinrichtung, in der der zu vererbende Berechtigungscode gespeichert ist (jeder Normalsender kann mehrere Berechtigungscodes speichern, um z.B. mehrere Tore bedienen zu können oder mehrere Funktionen befehlen zu können) durch Betätigung einer entsprechenden Taste oder dergleichen ausgewählt. Wird ein Speicherplatz ausgewählt, auf dem sich ein Normalcode befindet, so sendet der vererbende Normalsender 18 den eingespeicherten Normalcode an den lernenden Normalsender 19. Das Einleiten des Programmierbetriebes kann dabei dem Normalsender 19 wenigstens auf zwei Arten angezeigt werden. Bei einer Ausführungsform gibt es eine spezielle Programmiertaste an einem oder an beiden der Normalsender 18, 19. Wird eine solche Programmiertaste z.B. am Normalsender 18 gedrückt, so gibt dieser ein Programmiersignal an den Normalsender 19 ab, der daraufhin den Lernvorgang mit einem daraufhin empfangenen Signalcode startet.

Die andere Möglichkeit, den Programmierbetrieb einzuleiten, ist bei einer weiteren Ausführungsform möglich, die ohne spezielle Programmiertasten auskommt. Zum Einleiten des Programmierbetriebes werden dabei einfach beide Normalsender nahe zueinander gebracht. Die dem Speicherplatz mit dem weiterzuvererbenden Berechtigungscode entsprechende Taste oder Tastenkombination wird am Normalsender 18 gedrückt und sofort danach wird die Taste oder die Tastenkombination am Normalsender 19 gedrückt, die dem gewünschten mit dem zu vererbenden Berechtigungscode zu belegenden Speicherplatz entspricht. Der Normalsender 18 sendet dann wie in einem Normalbetrieb seinen Berechtigungscode fortlaufend aus. Der Normalsender 19 startet bei Drücken der Taste oder der Tastenkombination, bevor er seinen Normalbetrieb aufnimmt und den auf dem zur Einspeicherung ausgewählten Speicherplatz noch befindlichen »alten" Berechtigungscode fortlaufend sendet, gesteuert durch eine entsprechende Steuereinrichtung (Steuer-programm) einen Abfragemodus, in dem Signale empfangen werden. Würden keine Signale empfangen werden, würde der Normatsender 19 seinen Normalbetrieb aufnehmen. In dem vorliegenden Fall empfängt er aber die fortlaufend gesendeten Berechtigungscodes, deren Signalstärke aufgrund der Nähe der beiden Normalsender 18, 19 zueinander eine Grenzwertschwelle überschreiten. Aufgrund dessen startet der Normalsender den Lernvorgang, um den gesendeten Berechtigungscode zu lernen.

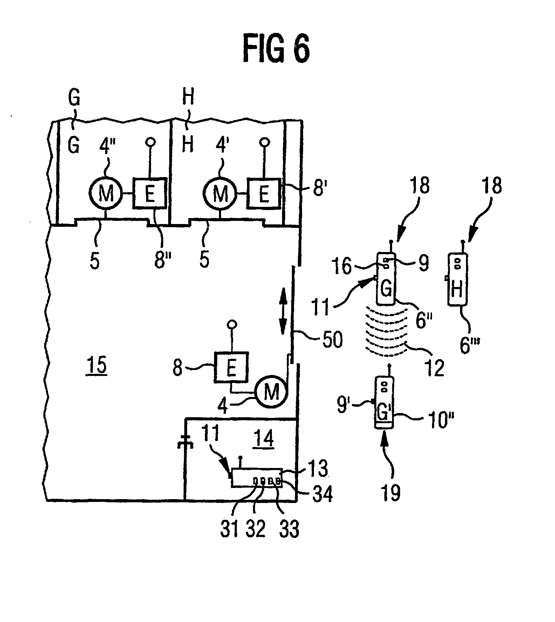

Ist der Lernvorgang gestartet, überprüft die erste Sicherungscodeerkennungseinrichtung des lernenden Normalsenders 18 die Sicherungscodekennung S/N des gesendeten und empfangenen Signalcodes und stellt fest (Schritt 20 von Fig. 3), daß sie nicht 1, sondern 0 beträgt, daß hier also ein Normalcode eingelernt werden soll. Die Sicherungscodeerkennungseinrichtung gibt ein entsprechendes Signal an eine für den Lernvorgang zuständige Steuerschaltung ab, der gesendete Signalcode (Normalcode) wird identisch als Berechtigungscode in die erste Speichereinrichtung auf den Speicherplatz übernommen, der durch die Betätigung der entsprechenden Taste oder Tastenkombination an dem Normalsender 19 beim Einleiten des Lernvorgangs angegeben worden ist. Die Kennungen und der Restcode des Normalcodes werden also identisch eingelernt (Schritt 22, Fig. 6). Das erfolgreiche Abschließen des Programmierbetriebes wird beispielsweise durch eine bestimmte Blinkfrequenz einer LED an einem oder beiden der Normalsender 18, 19 angezeigt.

Wird jedoch bei Einleiten des Lernvorganges am vererbenden Normalsender eine Taste gedrückt, die einen Speicherplatz mit einem Sicherungscode entspricht, so sendet der vererbende Normalsender 18 einen kopierten Sicherungscode als Funksignal an den lernenden Normalsender 19. Die erste Sicherungscodeerkennungseinrichtung des letzteren überprüft die Sicherungscodekennung und stellt S/N gleich 1 fest (Schritt 20). Daraufhin überprüft die Siche-rungscodeerkennungseinrichtung, ob eine Kopie oder ein Original vorliegt, ob also die Kopierkennung O/K gleich 1 ist (Schritt 24). Sie stellt O/K gleich 0 fest (Zweig 26) und bricht den Lernvorgang, d.h. den Programmierbetrieb ab (Schritt 28).

Zum Einprogrammieren oder Erlernen eines Sicherungscodes muß der Sicherungssender 13 verwendet werden. Wie dies geschieht, wird im folgenden am Beispiel einer Programmierung des Normalsender 17 erläutert.

Der in diesem Fall lernende Normalsender 17 und der Sicherungssender 13 werden in Funkreichweite gebracht. Der Programmierbetrieb oder der Lernvorgang wird wie oben mit Bezug auf ein Vererben von Normalcodes von Normalsender 18 zu Normalsender 19 beschrieben eingeleitet. Dabei wird der Speicherplatz der zweiten Speichereinrichtung mit dem gewünschten Sicherungscode (der Sicherungssender kann entsprechend der Anzahl der Speicherplätze mehrere Sicherungscodes auf Abruf gespeichert haben), durch Betätigung einer Taste oder Tastenkombination ausgewählt. Zum Beispiel weist der Sicherungssender 13 vier Tasten 31 bis 34 (siehe Fig. 6, die weiter unten näher erläutert wird) auf, die einzeln oder untereinander kombiniert zusammen einen Zugriff auf fünfzehn verschiedene Speicherplätze der zweiten Speichereinrichtung des Sicherungssender 13, entsprechend fünfzehn auswählbaren Sicherungscodes ermöglichen (in vergleichbarer Weise können auch die Normalsender 17, 18, 19 zehn durch Tastenkombinationen von höchstens zwei der vier Tasten anwählbare Speicherplätze in der ersten Speichereinrichtung aufweisen). In dem hier vorliegenden Beispiel sollen die Tasten 32 und 34 gemeinsam gedrückt werden. Der auf dem entsprechenden Speicherplatz gespeicherte Sicherungscode wird gesendet und von dem Normalsender empfangen. Die oben beschriebenen Schritte 20 und 24 werden von der ersten Sicherungscodeerkennungseinrichtung durchgeführt, sie stellt fest: S/N ist gleich 1 und O/K ist gleich 1, es liegt also ein Sicherungscode im Originalzustand vor. Dieser Sicherungscode wird an die erste Kopierkennungsänderungseinrichtung des Normalsenders 17 weitergegeben. Diese ändert die Kopierkennung O/K von 1 zu 0, die Kennung SIN bleibt 1. Der so erzeugte kopierte Sicherungscode wird wie bei Schritt 30 in Fig. 3 beschrieben mit dem unveränderten Restcode eingelernt, das heißt auf den z.B. durch Tastendruck oder dergleichen Betätigung bezeichneten Speicherplatz des Normalsenders 17 gespeichert.

Ganz analog erfolgt der Lernvorgang bei dem Empfänger 8, wobei dort aber gemäß der hier dargestellten beispielhaften Ausführungsform nur ein Speicherplatz in der dritten Speichereinrichtung belegbar ist, so daß dieser nicht durch Tastendruck bezeichnet werden braucht. In diesem Fall enthält der Empfänger eine Programmiertaste, bei deren Drücken der Empfänger 8 den Lernvorgang mit einem gleichzeitig empfangenen Berechtigungscode startet. Bei einer möglichen weiteren Ausführungsform, bei der der Empfänger 8 mehrere fernsteuerbare Funktionen durch Schaltsignale einleiten soll, ist auch die dritte Speichereinrichtung mit mehreren durch Tasten oder dergleichen oder auch durch äußere Verdrahtung anwählbaren Speicherplätzen zur Aufnahme mehrerer Berechtigungscodes versehen. Zum Beispiel wird der Empfänger 8 mit dem Normalsender 18 auf den unter einer Taste gespeicherten Normalcode (derselbe, den der Normalsender 18 laut vorheriger Beschreibung an den Normalsender 19 weitervererbt hat) eingestellt. Soll der Empfänger 8 dagegen nur auf einen Sicherungscode reagieren, so wird er mit dem Sicherungssender 13 z.B. auf den unter der Tastenkombination 32, 34 gespeicherten Sicherungscode eingestellt, so daß er auf den genauso programmierten Normalsender 17 reagiert.

Das die drei Arten von Berechtigungscodes verwendende Schließsystem wird nun anhand dreier konkreter Anwendungsbeispiele näher erläutert.

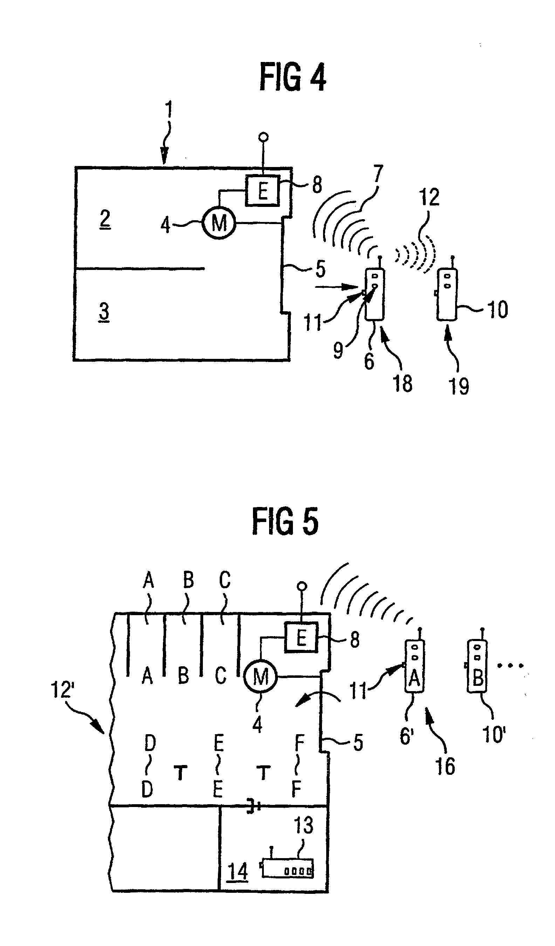

In Fig. 4 ist eine Privatgarage 1 mit zwei Stellplätzen 2 und 3 schematisch dargestellt. Der Zugang oder die Zufahrt zu der Privatgarage 1 ist durch eine mit einem automatisch mittels einer Antriebseinheit in Form eine Motors 4 betätigbaren Garagentor 5 verschließbare Toröffnung möglich. Zur Betätigung des Garagentores 5 ist der Normalsender 18 in Form eines Handfunksenders 6 vorgesehen, der ein Funksignal 7 zu dem in Form eines an den Motor 4 angeschlossenen Funkempfängers vorliegenden Empfänger 8 senden kann. Zum Einleiten der Abgabe des Funksignals 7 ist der Handfunksender 6 mit einer ersten Taste 9 versehen. In dem der ersten Taste 9 entsprechenden Speicherplatz der ersten Speichereinrichtung des Handfunksenders 6 ist ein Normalcode eingespeichert. Bei Betätigen der Taste 9 sendet der Handfunksender 6 ein Funksignal 7, das als Bestandteil den Normalcode aufweist. In der dritten Speichereinrichtung des Empfängers 8 ist der identische Normalcode gespeichert. Der Empfänger 8 empfängt das Funksignal 7 und überprüft, ob der empfangene Normalcode mit seinem als Berechtigungscode gespeicherten Normalcode übereinstimmt und gibt, falls dies der Fall ist, das Schaltsignal 40 an den Motor 4 ab, der das Garagentor 5 öffnet. Eventuell wird von dem Empfänger 8 auch eine Lichtquelle für eine bestimmte Zeit eingeschaltet.

Der Handfunksender 6 weist weiter in der hier gezeigten Ausführungsform eine nicht leicht zugängliche Taste 11 auf, mittels der eine Programmierfunktion eingeleitet werden kann. In nicht dargestellten Ausführungsformen ist die Taste 11 entbehrlich, wenn die Normalsender vor dem Senden in einem Normalbetrieb zunächst den Abfragemodus wie oben bei dem Normalsender 19 beschrieben starten und die Empfangseinrichtung die oben erwähnte Programmiertaste aufweist.

Mit Hilfe der Programmierfunktion kann der Handfunksender 6 seinen gespeicherten Normalcode identisch an eine weitere Sendeeinrichtung, beispielsweise den hier in Form eines weiteren Handfunksenders 10 realisierten Normalsender 19 oder an den Empfänger 8 oder eine weitere (nicht dargestellte) Empfangseinrichtung zum identischen Einspeichern desselben in deren Speichereinrichtungen übermitteln und vererben. Die Übermittlung erfolgt über ein Funksignal 12. Dabei wird der oben beschriebene Lernvorgang durchgeführt. Als Ergebnis weist der Handfunksender 10 denselben Normalcode als Berechtigungscode wie der Handfunksender 6 auf. Da die beiden Handfunksender 6 und 10 gleich aufgebaut sind, kann der Normalcode von dem Handfunksender 6 oder 10 identisch immer wieder dupliziert werden.

Die Sicherungscodes werden bei dem Anwendungsbeispiel in Fig. 1 nicht verwendet. Das Schließsystem weist aber diese Optionen bereits auf, um in einem besonderen Fall, wenn erhöhte Sicherheit gewünscht wird, leicht nachgerüstet zu werden. Für einen solchen Fall braucht nur ein passender Sicherungssender gekauft werden, der zum Beispiel vom Hersteller auf besondere Signalcodes zum Einprogrammieren von Sicherungscodes bei diesem speziellen Schließsystem eingestellt wird.

Ein ganz ähnliches Schließsystem wie das in Fig. 4 gezeigte ist in Fig. 5 dargestellt, die schematisch eine Sammelgarage 12 mit Stellplätzen A bis F zeigt. Auch hier ist die Zufahrt über eine durch das Garagentor 5 verschließbare Toröffnung möglich. Zum Betätigen des Motors 4 hat jeder Stellplatzinhaber Normalsender 16 in Form von Handfunksendern 6', 10',..., die in der gleichen Weise aufgebaut sind wie die Handfunksender 6 und 10 und somit bei der hier gezeigten Ausführungsform auch die Taste 11 zum Einleiten der Programmierfunktion besitzen. Um ein Sicherheitsrisiko durch unkontrollierbares Duplizieren des Berechtigungscodes auszuschließen, liegt dieser jedoch nicht, wie bei dem Schließsystem von Fig. 1 als Normalcode vor, sondern als kopierter Sicherungscode. Als Programmiereinrichtung für das in Fig. 5 gezeigte Schließsystem dient der Sicherungssender 13, der an einem gesicherten Ort 14 aufbewahrt wird. Ein Einlernen des zum Öffnen des Garagentores 5 erforderlichen Sicherungscodes der Handfunksender 6', 10', ... und des Empfängers 8 ist nur mit dem Sicherungssender 13 möglich. Will hier ein Besitzer eines der Tiefgaragenstellplätze A-F zum Beispiel für eine weitere Person einen weiteren Handfunksender haben, so kann er diesen zwar kaufen, aber nicht einfach mit seinem eigenen Handfunksender (z.B. dem Handfunksender 6') programmieren. Hierzu muß er zu der Person, die Zugang zu dem Raum 14 hat (z.B. die Hausverwaltung, der Hausmeister...) und sich von dieser den Sicherungscode abholen. Der Kreis der Personen, die im Besitz eines berechtigten Normalsenders 16 (d.h. von Handfunksendern 6', 10',...) sind, bleibt somit kontrollierbar.

Ein Beispiel, bei der eine Kombination aus Normalcodes und Sicherungscodes in einem Schließsystem verwendet werden, ist, in Fig. 6 gezeigt Hier ist ein Hof 15 nur über eine durch ein mittels des Sicherungscodes fernsteuerbares Hoftor 50 verschließbare Hofeinfahrt erreichbar. In dem Hof 15 befinden sich mehrere Einzelgaragen G, H, die durch mittels Normalcodes fernsteuerbare Garagentore 5 verschließbar sind. Die dazugehörigen Normalsender 18 in Form von Handfunksendern 6" und 6''' geben auf Druck auf die erste Taste 9 den Normalcode für die jeweils passende Einzelgarage G bzw. H an den dortigen (Funk-) Empfänger 8' bzw. 8" ab, der den Motor 4' bzw. 4" anschaltet. Auf Druck einer zweiten Taste 16 geben die Handfunksender 6", 6"' den Sicherungscode zum Öffnen des Hoftores 50 ab.

Der Normalcode ist wie oben anhand der Normalsender 18 und 19 erläutert durch Einleitung der Programmierfunktion oder des Lernvorganges über die Taste 11 an einen weiteren Handfunksender 10" wie durch das Funksignal 12 angedeutet übertragbar, nicht aber der Sicherungscode.

Will nun der Besitzer der Einzelgarage H einen anderen Berechtigungscode einspeichern als der in dem Empfänger 8" der Nachbargarage G gespeicherte Normalcode, so kann er mit Hilfe des Codegenerators in seinem Handfunksender 6"' einen neuen Normalcode erzeugen. Der Codegenerator ersetzt die variable Bitfolge des werkseitig in der ersten Speichereinrichtung vorgegebenen Restcodes des Normalcodes durch eine mittels des Zählers erzeugte quasi zufällige Bitfolge. Der so erzeugte neue Normalcode mit geändertem variablen Teil des Restcodes kann dann wie bei dem oben beschriebenen Lernvorgang zwischen den Normalsendern 18 und 19 von dem Handfunksender 6"' auf den Empfänger 8' übertragen werden. Andererseits kann mittels der Reseteinrichtung (d.h. mittels Betätigung der Neucodiertaste über eine bestimmte Zeitdauer hinaus) der ursprünglich vorhandene Normalcode, der in dem Festspeicher des Handfunksenders 6''' gespeichert ist, wieder hergestellt werden.

Bei dem Sicherungssender 13 dienen die fünfzehn Speicherplätze, welche mittels Kombination der Tasten 31 - 34 untereinander abrufbar sind, dazu "neue" Sicherungscodes zu liefern. D.h. der auf dem angewählten Speicherplatz gespeicherte Sicherungscode kann auf die gewünschten Handfunksender, z.B. 6" und 6"' und den Empfänger 8 eingelernt werden. In einer Ausführungsform können einer oder mehrere der Speicherplätze auch mit Normalcodes oder kopierten Sicherungscodes in einem Lernvorgang belegt werden. Der Sicherungssender 13 hat dabei also die gleiche Funktion wie ein lernfähiger Normalsender. Die ursprünglich eingestellten Sicherungscodes können bei einer solchen Ausführungsform mit einer zweiten Reseteinrichtung wieder auf die in einem zweiten Festspeicher innerhalb des Sicherungscodes 13 gespeicherten werkseitig vorgegebenen Bitfolge (den Werks-Sicherungscode) eingestellt werden.

Besteht nun bei den in Fig. 5 und 6 gezeigten Anwendungsbeispielen, beispielsweise dadurch, daß einer der Handfunksender 6', 10', 6", 10" verloren geht, oder ein ehemals berechtigter Besitzer eines solchen denselben bei seinem Auszug unberechtigterweise mitgenommen hat, die Gefahr eines nichtberechtigten Zugriffs auf den Empfänger 8, wird einfach der betreffende Empfänger 8 in einem wie oben beschriebenen Lernvorgang mit einem neuen Sicherungscode (aus einem der fünfzehn Speicherplätze) durch den Sicherungssender 13 versehen. Ab dann besteht die Möglichkeit eines nichtberechtigten Zugriffs auf den Empfänger 8 nicht mehr, da der alte Sicherungscode nicht mehr paßt. Zwangsweise müssen sich dann alle berechtigten Personen ihren Normalsender, d.h. ihren entsprechenden Handfunksender 6', 10', 6", ..., wieder neu durch den Sicherungssender 13 auf den neuen Sicherungscode programmieren lassen. Dabei besteht natürlich eine Kontrollmöglichkeit darüber, welche Person Zugriff auf den neuen Sicherungscode hat, da die Person ja ihren Handfunksender zum Neuprogrammieren vorbeibringen muß.

Der technische Aufbau der Handfunksender ist bei allen in den Fig. 4 bis 6 gezeigten identisch, alle sind nämlich als Normalsender mit den oben erwähnten Einrichtungen aufgebaut. Unterschiedlich ist lediglich der jeweils eingespeicherte Berechtigungscode.

Bei einer nicht dargestellten Ausführungsform ist im Inneren der Normalsender 16, 17, 18 und des Empfängers 8 eine Sicherung eingebaut, beispielsweise in Form einer Leiterbrücke. Wird diese Sicherung entfernt, können die entsprechenden Einrichtungen 16, 17, 18, 8 nicht neu eingelernt werden, die Einrichtung verweigert jede Aufnahme des Lernvorganges. Die Taste 11 zum Einleiten des Programmbetriebes ist in noch einer weiteren Ausführungsform an einer versteckten Stelle im Inneren der Sender 16, 17, 18, 13 untergebracht und so ausgebildet, daß sie nur mit einem speziellen Werkzeug, bspw. einer Kugelschreiberspitze oder dergleichen betätigt werden kann. In der gleichen Weise können eine Taste oder mehrere Tasten (Neucodiertaste bzw. -tasten) untergebracht sein, die zur Betätigung des Codegenerators und damit auch der Reseteinrichtung dienen.

Wesentliche Aspekte des hier beschriebenen signalbetätigbaren Schließsystems werden im folgenden anhand der Darstellung in Fig. 1 noch einmal zusammengefaßt:

Ein signalbetätigbares Schließsystem für Türen, Tore oder dergleichen verwendet, um ein unkontrolliertes Duplizieren von Berechtigungscodes einerseits, anderseits aber wenn gewünscht eine einfache Dupliziermöglichkeit dieser Berechtigungscodes zuzulassen, mindestens drei Arten von Signalcodes als Berechtigungscodes, nämlich frei kopierbare Normalcodes, nur einmal kopierbare Sicherungscodes und nicht kopierbare kopierte Sicherungscodes. Die in dem Schließsystem verwendeten normalen Komponenten (Normal-sender 17, 18, 19 und gegebenenfalls in einigen Ausführungsformen auch der Empfänger 8) können bei einem Lernvorgang, bei dem ein neuer Berechtigungscode einprogrammiert werden soll, unterscheiden, um welchen Signalcode es sich jeweils handelt. Dazu weisen die verwendeten Signalcodes Kennungen auf, die beim Lernen gegebenenfalls modifiziert werden. Sicherheitscodes können nur von einer speziellen Programmiereinrichtung (Sicherungssender 13) übertragen werden, die den Sicherungscode in einer Originalkennung aufweist. Beim Kopieren dieser Sicherungscodes wird die Kennung verändert. Ein Lemvorgang mit einem solchen kopierten Sicherungscode wird verweigert, wohingegen die normalen Komponenten (z.B. der Normalsender 18) einen Normalcode identisch weitervererben können.

## Patentansprüche

1. Signalbetätigbares Schließsystem für eine Tür oder ein Tor (5, 50), bei welchem Schließsystem die Zutritts- oder Zufahrtsberechtigung durch Übertragung eines Signalcodes nachweisbar ist, mit:
• wenigstens einer Sendeeinrichtung (17, 18, 19; 6, 10, 6', 10', 6", 10", 6''') zum Senden des Signalcodes zum automatischen Betätigen oder Ver- oder Entriegeln der Tür oder des Tores (5, 10),
• wenigstens einer Empfangseinrichtung (8, 8', 8") zum Empfangen und Überprüfen des Signalcodes und Liefern eines Schaltsignals (40) an ein Schloß oder eine Antriebseinheit (4) der Tür oder des Tores (5, 50) als Reaktion auf den Empfang eines Signalcodes, der mit einem gespeicherten Berechtigungscode übereinstimmt, wobei der Berechtigungscode von der der Sendeeinrichtung (17, 18, 19; 8, 10, 6', 10', 6", 10", 6''') und/oder von der Empfangseinrichtung (8, 8', 8") in einem Programmierbetrieb des Schließsystems erlernbar ist,
• einer Programmiereinrichtung (13), die zum Vererben des Berechtigungscodes in dem Programmierbetrieb auf die Sende- oder die Empfangseinrichtung (17, 18, 19, 6, 10, 6', 10', 6", 10", 6'''; 8, 8', 8") einen zum Vererben berechtigenden Sicherungscode gespeichert hat, und
• einer der zu programmierenden Sende- oder der Empfangseinrichtung (17, 18, 19, 6, 10, 6', 10', 6", 10", 6"'; 8, 8', 8") zugeordneten Sicherungscodeerkennungseinrichtung, die in dem Programmierbetrieb den zum Vererben berechtigenden Sicherungscode zum Zulassen eines Erlernens des Berechtigungscodes erkennt,
**dadurch gekennzeichnet,**
**daß** der Sicherungscode in der Programmiereinrichtung mit einer Kopierkennung (O/K) in einem Originalzustand (O/K=1) gespeichert ist,
**daß** die Sicherungscodeerkennungseinrichtung in dem Programmierbetrieb ein Erlernen des Berechtigungscodes durch Kopieren des Sicherungscodes nur zuläßt, wenn die Kopierkennung in dem Originalzustand (O/K=1) ist,
und **daß**
eine Kopiercodeänderungseinrichtung vorgesehen ist, die beim Kopieren des Sicherungscodes die Kopierkennung (O/K) des Sicherungscodes von dem Originalzustand (O/K=1) in einen einen kopierten Sicherungscode anzeigenden Kopierzustand (O/K=0) ändert und den kopierten Sicherungscode mit der den Kopierzustand (O/K=0) anzeigenden Kopierkennung als den Berechtigungscode zum Einlernen in der zu programmierenden Sende- bzw. der Empfangseinrichtung (17, 18, 19, 6, 10, 6', 10', 6", 10", 6'''; 8, 8', 8") liefert.

2. Schließsystem nach Anspruch 1,
**dadurch gekennzeichnet,**
**daß** die Sicherungscodeerkennungseinrichtung zum Unterscheiden des Sicherungscodes von einem frei kopierbaren Normalcode fähig ist und ein Erlernen oder Einprogrammieren des Berechtigungscodes in dem Programmierbetrieb durch identisches Kopieren eines Normalcodes ohne Kopierkennungserfassung zuläßt.

3. Schließsystem nach Anspruch 2,
**dadurch gekennzeichnet,**
**daß** die Kopiercodeänderungseinrichtung der Sendeeinrichtung (17, 18, 19, 6, 10, 6', 10', 6", 10", 6"') zugeordnet ist, weiche eine Programmierfunktion aufweist zum Vererben ihres Berechtigungscodes, wenn er als Normalcode vorliegt, an eine weitere Sendeeinrichtung (19, 10, 10") und/oder an die oder an eine weitere Empfangseinrichtung (8, 8', 8") durch identisches Kopieren des Normalcodes in die weitere Sendeeinrichtung (19, 10, 10") bzw. in die Empfangseinrichtung (8, 8', 8") oder die weitere Empfangseinrichtung.

4. Schließsystem nach einem der Ansprüche 2 oder 3,
**dadurch gekennzeichnet,**
**daß** die oder eine weitere Kopiercodeänderungseinrichtung der Empfangseinrichtung (8, 8', 8") zugeordnet ist, die eine Programmierfunktion aufweist zum Vererben ihres Berechtigungscodes, wenn er als Normalcode vorliegt, an die oder eine weitere Sendeeinrichtung (17, 18, 19, 6, 10, 6', 10', 6", 10", 6'") durch identisches Kopieren des Normalcodes in die Sendeeinrichtung (17, 18, 19, 6, 10, 6', 10', 6", 10", 6''') bzw. die weitere Sendeeinrichtung.

5. Schließsystem nach einem der Ansprüche 1 bis 4,
**dadurch gekennzeichnet,**
**daß** der Programmierbetrieb oder die Programmierfunktion von einer Bedienperson durch Tastendruck oder dergleichen Betätigung einleitbar ist.

6. Schließsystem nach einem der Ansprüche 1 bis 5,
**dadurch gekennzeichnet,**
**daß** die Programmiereinrichtung ein Sicherungssender (13) ist, der den Sicherungscode im Programmierbetrieb an die zu programmierende Sende- oder Empfangseinrichtung (17, 18, 19, 6, 10, 6', 10', 6", 10", 6'''; 8, 8', 8") sendet.

7. Schließsystem nach Anspruch 6,
**dadurch gekennzeichnet,**
**daß** der Sicherungssender (13) zusätzlich zu seiner Fähigkeit zum Vererben von Sicherungscodes auch noch die Eigenschaften der Sendeeinrichtung (17, 18, 19, 6, 10, 6', 10', 6", 10", 6''') aufweist.

8. Schließsystem nach Anspruch 2 oder Anspruch 2 und einem der Ansprüche 3 bis 7,
**dadurch gekennzeichnet,**
**daß** die wenigstens eine Sendeeinrichtung (17, 18, 19) wenigstens einen Handsender (6, 10, 6', 10', 6", 10", 6''') umfaßt, der die Sicherungscodeerkennungseinrichtung und die Kopiercodeänderungseinrichtung und eine Speichereinrichtung mit einem oder mehreren Speicherplätzen zum Einspeichern eines oder mehrerer jeweils als kopierter Sicherungscode oder als Normalcode vorliegenden Signalcodes aufweist, wobei der jeweilige Speicherplatzinhalt durch Tastendruck oder dergleichen Betätigung zum Senden für einen Normalbetrieb oder Vererben in dem Programmierbetrieb wählbar abrufbar ist.

9. Schließsystem nach einem der Ansprüche 1 bis 8,
**dadurch gekennzeichnet,**
**daß** der Sicherungscode eine Bitfolge aufweist, die aus wenigstens einem bestimmten Bit als Sicherungscodekennung (S/N) zum Anzeigen des Sicherungscodes und wenigstens einem weiteren bestimmten die Kopierkennung (O/K) bildenden Bit sowie einem aus mehreren Bits bestehenden Restcode, der vom Empfänger (8, 8', 8") zur Identifikation zum Auslösen des Schaltsignals (40) verwendbar ist, gebildet ist.

10. Schließsystem nach einem der Ansprüche 1 bis 9,
**dadurch gekennzeichnet,**
**daß** die Programmiereinrichtung (13) einen Sicherungscodegenerator aufweist zum Erzeugen eines neuen Sicherungscodes.

11. Schließsystem nach Anspruch 10,
**dadurch gekennzeichnet,**
**daß** die Programmiereinrichtung (13) weiter einen Festspeicher aufweist, in welchem der ursprünglich vorgegebene Sicherungscode gespeichert ist, und eine Reseteinrichtung zum Rückstellen der Programmiereinrichtung (13) auf diesen ursprünglichen Sicherungscode.

12. Verfahren zum Betreiben eines signalbetätigbaren Schließsystems für eine Tür oder ein Tor (5, 50), wobei in einem Normalbetrieb des Schließsystems die Zutritts- oder Zufahrtsberechtigung durch Übertragung eines Signalcodes nachweisbar ist,
welcher Signalcode
von wenigstens einer Sendeeinrichtung (17, 18, 19; 6, 10, 6', 10', 6", 10", 6"') gesendet wird zum automatischen Betätigen oder Ver- oder Entriegeln der Tür oder des Tores (5, 50),
und von wenigstens einer Empfangseinrichtung (8, 8', 8") empfangen und überprüft wird, wobei die Empfangseinrichtung (8, 8', 8") ein Schaltsignal an ein Schloß oder eine Antriebseinheit (4) der Tür oder des Tores (5, 50) als Reaktion auf den Empfang eines Signalcodes, der mit einem Berechtigungscode übereinstimmt, liefert,
wobei in einem Programmierbetrieb zum Einlernen des Berechtigungscodes in die Sendeeinrichtung (17, 18, 19; 6, 10, 6', 10', 6", 10", 6''') oder die Empfangseinrichtung (8, 8', 8") ein Signalcode mittels einer zum Vererben des Berechtigungscodes berechtigten Programmiereinrichtung (13) zu der Sendeeinrichtung (17, 18, 19; 6, 10, 6', 10', 6", 10", 6''') oder der Empfangseinrichtung (8, 8', 8") gesendet und durch die Sende- bzw. Empfangseinrichtung (17, 18, 19; 6, 10, 6', 10', 6", 10", 6''', 8, 8', 8") zum Einlernen empfangen wird,
**gekennzeichnet durch**
Versehen des in dem Programmierbetrieb zum Einlernen des Berechtigungscodes in die Sendeeinrichtung (17, 18, 19; 6, 10, 6', 10', 6", 10", 6''') oder die Empfangseinrichtung (8, 8', 8") mittels der Programmiereinrichtung (13) zu der Sendeeinrichtung (17, 18, 19; 6, 10, 6', 10', 6", 10", 6''') oder der Empfangseinrichtung (8, 8', 8") zu sendenden Signalcodes mit einer Sicherungscodekennung (S/N), die einen frei kopierbaren Normalcode oder einen kopiergeschützten Sicherungscode mit einer Kopierkennung (O/K), die einen Originalzustand (O/K=1) oder einen kopierten Zustand (O/K=0) des Sicherungscode anzeigt, kennzeichnet,
Feststellen (20), nach dem Empfangen des Signalcodes **durch** die Sende- bzw. Empfangseinrichtung (17, 18, 19; 6, 10, 6', 10', 6", 10", 6'''; 8, 8', 8"), in der Sende- oder Empfangseinrichtung (17, 18, 19; 6, 10, 6', 10', 6", 10", 6'''; 8, 8', 8") anhand der Sicherungscodekennung, ob ein Normalcode (S/N=0) oder ein Sicherungscode (S/N=1) vorliegt,
Speichern (22) des Signalcodes identisch als Berechtigungscode, wenn ein Normalcode vorliegt, oder
Feststellen (24) anhand der Kopierkennung (O/K), ob ein Originalzustand (O/K=1) des Sicherungscode vorliegt oder ein kopierter Zustand (O/K=0),
Abbrechen (28) des Programmierbetriebes, wenn ein kopierter Zustand (O/K=0) vorliegt, oder
Übernehmen, wenn der Originalzustand (O/K=1) vorliegt, des Sicherungscodes, Ändern der Kopierkennung (O/K) des übernommenen Sicherungscode von dem Originalzustand (O/K=1) in den kopierten Zustand (O/K=0) und Speichern (30) des kopierten Sicherungscode mit der geänderten Kopierkennung in dem kopierten Zustand (O/K=0) als Berechtigungscode.

13. Verfahren nach Anspruch 12,
**gekennzeichnet durch** Verwenden eines Sicherungssenders (13) als Programmiereinrichtung, der eine Programmierfunktion zum Vererben des Sicherungscodes an die Sendeeinrichtung (17, 18, 19; 6, 10, 6', 10', 6", 10", 6''') oder die Empfangseinrichtung (8, 8', 8") hat, wobei der Sicherungssender (13) als Berechtigungscode den mit der Kopierkennung (O/K=1) in dem Originalzustand eingespeicherten Sicherungscode aufweist.

14. Verfahren nach einem der Ansprüche 12 oder 13,
**gekennzeichnet durch** Vererben von Normalcodes von der Sendeeinrichtung (17, 18, 19; 6, 10, 6', 10', 6", 10", 6''') zu einer weiteren, zu programmierenden Sendeeinrichtung und/oder von der Sendeeinrichtung (17, 18, 19; 6, 10, 6', 10', 6", 10", 6''') zur zu programmierenden Empfangseinrichtung (8, 8', 8") **durch** Einleiten einer Programmfunktion an der vererbenden Sendeeinrichtung (17, 18, 19; 6, 10, 6', 10', 6", 10", 6"'; 8, 8', 8") und/oder der zu programmierenden Sende- bzw. Empfangseinrichtung.

## Claims

1. Signal-operated closure system for a door or gate (5, 50), in which system authorisation to enter or drive in can be detected by the transfer of a signal code, with:
• at least one transmitter (17, 18, 19; 6, 10, 6', 10', 6", 10", 6"') for transmitting the signal code for automatically actuating or locking or unlocking the door or gate (5, 10),
• at least one receiver (8, 8', 8") for receiving and checking the signal code and delivering a switching signal (40) to a lock or a drive unit (4) for the door or gate (5, 50) in response to receiving a signal code which agrees with a stored authorisation code, the authorisation code being capable of being input by the transmitter (17, 18, 19; 6, 10, 6', 10', 6", 10", 6"') and/or by the receiver (8, 8', 8") in a programming operation of the closure system,
• a programming device (13) which, in order to pass on the authorisation code in the programming operation to the transmitter or receiver (17, 18, 19; 6, 10, 6', 10', 6", 10", 6"'; 8, 8', 8"), has stored a security code authorising this passing on, and
• a security code recognition device associated with the transmitter or receiver (17, 18, 19; 6, 10, 6', 10', 6", 10", 6"'; 8, 8', 8") which is to be programmed, which, during the programming operation, recognises the security code authorising passing on to allow the authorisation code to be learned,
**characterised in that**
the security code in the programming device is stored with a copy identifier (O/K) in an original state (O/K=1),
the security code recognition device in the programming operation only allows the authorisation code to be learned by copying the security code if the copy identifier is in the original state (O/K=1),
and
a copy code altering device is provided which, during the copying of the security code, changes the copy identifier (O/K) of the security code from the original state (O/K=1) into a copy state (O/K=0) indicating a copied security code and delivers the copied security code with the copy identifier indicating the copy state (O/K=0) as the authorisation code for learning in the transmitter or receiver (17, 18, 19; 6, 10, 6', 10', 6", 10", 6"'; 8, 8', 8") which is to be programmed.

2. Closure system according to claim 1, **characterised in that** the security code recognition device is capable of distinguishing the security code from a freely copyable normal code and allows learning or programming in of the authorisation code in the programming operation by identical copying of a normal code without detecting a copy identifier.

3. Closure system according to claim 2, **characterised in that** the copy code altering device is associated with the transmitter (17, 18, 19; 6, 10, 6', 10', 6", 10", 6"') which has a programming function for passing on its authorisation code when it is present as a normal code to an additional transmitter (19, 10, 10") and/or to the or an additional receiver (8, 8', 8") by identical copying of the normal code into the additional transmitter (19, 10, 10") or into the receiver (8, 8', 8") or the additional receiver.

4. Closure system according to one of claims 2 or 3, **characterised in that** the or another copy code altering device is associated with the receiver (8, 8', 8") which has a programming function for passing on its authorisation code when it is present as a normal code to the or an additional transmitter (17, 18, 19; 6, 10, 6', 10', 6", 10", 6"') by identical copying of the normal code into the transmitter (17, 18, 19; 6, 10, 6', 10', 6", 10", 6"') or the additional transmitter.

5. Closure system according to one of claims 1 to 4, **characterised in that** the programming operation or programming function can be initiated by an operator by pressing a key or keys or similar action.

6. Closure system according to one of claims 1 to 5, **characterised in that** the programming device is a security transmitter (13) which sends the security code in the programming operation to the transmitter or receiver (17, 18, 19; 6, 10, 6', 10', 6", 10", 6"'; 8, 8', 8") which is to be programmed.

7. Closure system according to claim 6, **characterised in that** in addition to being able to transmit security codes the security transmitter (13) also has the properties of the transmitter (17, 18, 19; 6, 10, 6', 10', 6", 10", 6"').

8. Closure system according to claim 2 or claim 2 and one of claims 3 to 7, **characterised in that** the minimum of one transmitter (17, 18, 19) comprises at least one hand-held transmitter (6, 10, 6', 10', 6", 10", 6"') which comprises the security code recognition device and the copy code altering device and a storage device with one or more storage locations for storing one or more signal codes each taking the form of a copied security code or a normal code, the contents of each storage location being able to be called up as required at the press of a key or similar operation for transmission for normal operation or to be passed on in the programming operation.

9. Closure system according to one of claims 1 to 8, **characterised in that** the security code has a bit sequence which is made up of at least one particular bit as the security code identifier (S/N) for indicating the security code and at least one other particular bit forming the copy identifier (O/K) and a residual code consisting of a number of bits which may be used by the receiver (8, 8', 8") for identification in order to trigger the switching signal (40).

10. Closure system according to one of claims 1 to 9, **characterised in that** the programming device (13) comprises a security code generator for producing a new security code.

11. Closure system according to claim 10, **characterised in that** the programming device (13) further comprises a read-only memory in which the security code originally input is stored, and a resetting device for resetting the programming device (13) to this original security code.

12. Method of operating a signal-operated closure system for a door or gate (5, 50) wherein in normal operation of the closure system authorisation to enter or drive in can be detected by the transfer of a signal code, wherein this signal code
is sent by at least one transmitter (17, 18, 19; 6, 10, 6', 10', 6", 10", 6"') for automatically actuating or locking or unlocking the door or gate (5, 50),
and is received and checked by at least one receiver (8, 8', 8"), the receiver (8, 8', 8") delivering a switching signal (40) to a lock or a drive unit (4) for the door or gate (5, 50) in response to receiving a signal code which agrees with an authorisation code,
while in a programming operation for inputting the authorisation code into the transmitter (17, 18, 19; 6, 10, 6', 10', 6", 10", 6"') or the receiver (8, 8', 8"), a signal code is sent to the transmitter (17, 18, 19; 6, 10, 6', 10', 6", 10", 6"') or the receiver (8, 8', 8") by means of a programming device (13) authorised to pass on the authorisation code and is received for storing by the transmitter or receiver (17, 18, 19; 6, 10, 6', 10', 6", 10", 6"', 8, 8', 8"),
**characterised in that** the signal code to be sent to the transmitter (17, 18, 19; 6, 10, 6', 10', 6", 10", 6"') or the receiver (8, 8', 8") by means of the programming device (13) in the programming operation to input the authorisation code into the transmitter (17, 18, 19; 6, 10, 6', 10', 6", 10", 6"') or receiver (8, 8', 8") is provided with a security code identifier (S/N) which characterises a freely copyable normal code or a copy-protected security code with a copy identifier (O/K) which indicates an original state (O/K=1) or a copied state (O/K=0) of the security code,
**in that**, after the signal code has been received by the transmitter or receiver (17, 18, 19; 6, 10, 6', 10', 6", 10", 6"', 8, 8', 8"), it is determined (20) in the transmitter or receiver (17, 18, 19; 6, 10, 6', 10', 6", 10", 6"', 8, 8', 8") using the security code identifier whether a normal code (S/N=0) or a security code (S/N=1) is present,
**in that** the signal code is stored (22) in identical manner as an authorisation code if a normal code is present, or
**in that** it is determined (24) using the copy identifier (O/K) whether an original state (O/K=1) of the safety code is present or a copied state (O/K=0),
**in that** the programming operation is stopped (28) if a copied state (O/K=0) is present, or
**in that** if the original state (O/K=1) is present the safety code is adopted, the copy identifier (O/K) of the adopted security code is changed from the original state (O/K=1) to the copied state (O/K=0) and the copied security code is stored (30) with the altered copy identifier in the copied state (O/K=0) as the authorisation code.

13. Method according to claim 12, **characterised by** the use of a security transmitter (13) as the programming device which has a programming function for transmitting the security code to the transmitter (17, 18, 19; 6, 10, 6', 10', 6", 10", 6"') or the receiver (8, 8', 8"), the security transmitter (13) comprising, as the authorisation code, the security code input in the original state with the copy identifier (O/K=1).

14. Method according to one of claims 12 or 13, **characterised by** the passing on of normal codes from the transmitter (17, 18, 19; 6, 10, 6', 10', 6", 10", 6"') to another transmitter which is to be programmed and/or from the transmitter (17, 18, 19; 6, 10, 6', 10', 6", 10", 6"') to the receiver (8, 8', 8") which is to be programmed, by initiating a programme function at the inheriting transmitter (17, 18, 19; 6, 10, 6', 10', 6", 10", 6"', 8, 8', 8") and/or the transmitter or receiver which is to be programmed.

## Revendications

1. Système de fermeture actionné par un signal pour une porte ou un portail (5, 50) assurant l'autorisation d'accès ou de passage par un signal codé comprenant
- au moins une installation d'émission (17, 18, 19 ; 6, 10, 6', 10', 6", 10", 6"'), pour émettre le signal codé pour l'actionnement automatique ou le verrouillage ou déverrouillage de la porte ou du portail (5, 10),
- au moins une installation de réception (8, 8") pour recevoir et vérifier le signal codé et fournir un signal de commutation (40) à une serrure ou une unité d'entraînement (4) de la porte ou du portail (5, 50) comme réaction à la réception d'un signal codé qui correspond à un code d'autorisation mis en mémoire, le code d'autorisation étant appris par l'installation d'émission (17, 18, 19 ; 6, 10, 6', 10', 6", 10", 6"') et/ou l'installation de réception (8, 8', 8") dans un mode de programmation du système de fermeture,
- une installation de programmation (13) qui contient en mémoire un code de sécurité autorisé à être transféré, pour transférer le code d'autorisation en mode de programmation à l'installation d'émission ou de réception (17, 18, 19 ; 6, 10, 6', 10', 6", 10", 6'''; 8, 8', 8") et
- une installation de reconnaissance de code de sécurité associée à l'installation d'émission ou de réception à programmer (17, 18, 19 ; 6, 10, 6', 10', 6", 10", 6'''; 8, 8', 8"), installation de reconnaissance de code de sécurité qui reconnaît en mode de programmation, le code de sécurité autorisé à être transféré, pour autoriser l'apprentissage du code d'autorisation,
**caractérisé en ce que**
le code de sécurité est enregistré dans l'installation de programmation avec une caractéristique de copie (O/K) dans un état d'origine (O/K=1), l'installation de reconnaissance de code de sécurité en mode de programmation, n'autorise l'apprentissage du code d'autorisation par copie du code de sécurité que si la caractéristique de copie est à l'état original (O/K=1) et
il est prévu une installation de changement de code de copie qui lorsqu'on copie le code de sécurité, change la caractéristique de copie (O/K) du code de sécurité pour le faire passer de l'état d'origine (O/K=1) dans un état de copie (O/K=0) indiquant que le code de sécurité a été copié et fournit le code de sécurité copié avec la caractéristique de code indiquant l'état de copie (O/K=0) comme code d'autorisation pour l'apprentissage dans l'installation d'émission et de réception à programmer (17, 18, 19 ; 6, 10, 6', 10', 6", 10", 6''' ; 8, 8', 8").

2. Système de fermeture selon la revendication 1,
**caractérisé en ce que**
l'installation de reconnaissance de code de sécurité est capable de distinguer le code de sécurité d'un code normal dont la copie est libre et d'autoriser un apprentissage ou une programmation du code d'autorisation en mode de programmation par la copie identique d'un code normal sans saisie de caractéristique de copie.

3. Système de fermeture selon la revendication 2,
**caractérisé en ce que**
l'installation de changement de code de copie est associée à l'installation d'émission (17, 18, 19 ; 6, 10, 6', 10', 6", 10", 6"') qui présente une fonction de programmation pour transférer son code d'autorisation s'il existe comme code normal à une autre installation d'émission (19, 10, 10") et/ou à la ou à d'autres installations de réception (8, 8', 8") par copie identique du code normal dans l'autre installation d'émission (19, 10, 10") ou dans l'installation de réception (8, 8', 8") ou l'autre installation de réception.

4. Système de fermeture selon l'une des revendications 2 ou 3,
**caractérisé en ce que**
la ou une autre installation de changement de code de copie est associée à l'installation de réception (8, 8', 8") qui présente une fonction de programmation pour transférer son code d'autorisation s'il est présent comme code normal vers la ou une autre installation d'émission (17, 18, 19 ; 6, 10, 6', 10', 6", 10", 6"') par la copie identique du code normal dans l'installation d'émission (17, 18, 19 ; 6, 10, 6', 10', 6", 10", 6"') ou l'autre installation d'émission.

5. Système de fermeture selon l'une des revendications 1 à 4,
**caractérisé en ce que**
le mode de programmation ou la fonction de programmation est lancé par un utilisateur qui actionne une touche ou effectue une opération analogue.

6. Système de fermeture selon l'une des revendications 1 à 5,
**caractérisé en ce que**
l'installation de programmation est un émetteur de sécurité (13) qui envoie le code de sécurité en mode de programmation vers l'installation d'émission ou de réception à programmer (17, 18, 19 ; 6, 10, 6', 10', 6", 10", 6''').

7. Système de fermeture selon la revendication 6,
**caractérisé en ce que**
l'émetteur de sécurité (13) présente en outre une capacité de transfert du code de sécurité en plus les propriétés de l'installation d'émission (17, 18, 19 ; 6, 10, 6', 10', 6", 10", 6"').

8. Système de fermeture selon la revendication 2 avec ou sans l'une des revendications 3 à 7,
**caractérisé en ce que**
au moins une installation d'émission (17, 18, 19) comporte au moins un émetteur à main (6, 10, 6', 10', 6", 10", 6"') qui comporte l'installation de reconnaissance de code de sécurité et d'installation de changement de code de copie et une installation de mémoire avec un ou plusieurs emplacements de mémoire pour enregistrer un ou plusieurs signal(aux) codé(s) présent(s) comme code de sécurité pouvant être copié ou comme code normal, le contenu de chaque emplacement de mémoire pouvant être appelé par l'actionnement d'une touche ou un actionnement analogue pour l'envoi pour un fonctionnement normal ou un transfert en mode de programmation.

9. Système de fermeture selon l'une des revendications 1 à 8,
**caractérisé en ce que**
le code de sécurité comporte une succession de bits formée par au moins un bit déterminé comme caractéristique de code de sécurité (S/N) pour indiquer le code de sécurité et au moins un autre bit formant la caractéristique de copie (O/K) ainsi qu'un code résiduel formé de plusieurs bits utilisable par le récepteur (8, 8', 8") pour identifier le déclenchement du signal de commutation (40).

10. Système de fermeture selon l'une des revendications 1 à 9,
**caractérisé en ce que**
l'installation de programmation (13) comporte un générateur de code de sécurité pour générer un nouveau code de sécurité.

11. Système de fermeture selon la revendication 10,
**caractérisé en ce que**
l'installation de programmation (13) comporte en outre une mémoire fixe contenant le code de sécurité prédéfini à l'origine et une installation de remise à état initial pour remettre l'installation de programmation (13) au code de sécurité d'origine.

12. Procédé de mise en oeuvre d'un système de fermeture actionné par un signal pour une porte ou un portail (5, 50) selon lequel en mode normal du système de fermeture, l'autorisation d'accès ou de passage est prouvée par la transmission d'un signal codé,
ce signal codé étant envoyé vers au moins une installation d'émission (17, 18, 19 ; 6, 10, 6', 10', 6", 10", 6"') pour actionner automatiquement ou verrouiller ou déverrouiller la porte ou le portail (5, 50) et
ce signal étant reçu par au moins une installation de réception (8, 8', 8") qui le vérifie, l'installation de réception (8, 8', 8") transmettant un signal de commutation à une serrure ou une unité d'entraînement (4) de la porte ou du portail (5, 50) comme réponse à la réception d'un signal codé qui correspond à un code d'autorisation, alors qu'
en mode de programmation, pour apprendre le code d'autorisation, l'installation d'émission (17, 18, 19 ; 6, 10, 6', 10', 6", 10", 6"') ou l'installation de réception (8, 8', 8") envoie un signal codé avec une installation de programmation (13) autorisée au transfert du code d'autorisation pour l'installation d'émission (17, 18, 19 ; 6, 10, 6', 10', 6", 10", 6"') ou l'installation de réception (8, 8', 8") et ce signal est reçu par l'installation d'émission ou de réception (17, 18, 19 ; 6, 10, 6', 10', 6", 10", 6'''; 8, 8', 8") pour l'apprentissage,
**caractérisé en ce que**
on munit le signal codé d'une caractéristique de code de sécurité (S/N), signal destiné en mode de programmation à apprendre le code d'autorisation dans l'installation d'émission (17, 18, 19 ; 6, 10, 6', 10', 6", 10", 6"') ou l'installation de réception (8, 8', 8") et à être envoyé à l'aide de l'installation de programmation (13) vers l'installation d'émission (17, 18, 19 ; 6, 10, 6', 10', 6", 10", 6"') ou l'installation de réception (8, 8', 8"), cette caractéristique de code de sécurité indiquant un code normal libre à copier ou un code de sécurité protégé contre la copie avec une caractéristique de copie (O/K) qui indique un état original (O/K=1) ou un état copié (O/K=0) pour le code de sécurité,
après la réception du signal codé par l'installation d'émission ou de réception (17, 18, 19 ; 6, 10, 6', 10', 6", 10", 6'''; 8, 8', 8") dans cette installation d'émission ou de réception (17, 18, 19 ; 6, 10, 6', 10', 6", 10", 6'''; 8, 8', 8") on constate à l'aide de la caractéristique de code de sécurité la présence d'un code normal (S/N=0) ou d'un code de sécurité (S/N=1),
on enregistre (22) le signal codé identique comme code d'autorisation dans le cas d'un code normal ou
on constate (24) à l'aide de la caractéristique de copie (O/K) si le code de sécurité est à l'état original (O/K=1) ou dans un état copié (O/K=0), on arrête (28) la programmation si l'on est en présence d'un état copie (O/K=0) ou
on reprend le code de sécurité si l'on est à l'état original (O/K=1), on change la caractéristique de copie (O/K) du code de sécurité reçu pour passer de l'état original (O/K=1) à l'état copie (O/K=0) et on enregistre (30) le code de sécurité copié et avec la caractéristique de copie changée indiquant l'état copié (O/K=0) comme code d'autorisation.

13. Procédé selon la revendication 12,
**caractérisé en ce qu'**
on utilise un émetteur de sécurité (13) comme installation de programmation qui possède une fonction de programmation pour transmettre le code de sécurité à l'installation d'émission (17, 18, 19 ; 6, 10, 6', 10', 6", 10", 6"') ou à l'installation de réception (8, 8', 8"), l'émetteur de sécurité (13) ayant comme code d'autorisation le code de sécurité enregistré à l'état d'original avec la caractéristique de copie (O/K=1).

14. Procédé selon l'une des revendications 12 ou 13,
**caractérisé en ce qu'**
on transfère le code normal par l'installation d'émission (17, 18, 19 ; 6, 10, 6', 10', 6", 10", 6"') vers une autre installation d'émission à programmer et/ou de l'installation d'émission (17, 18, 19 ; 6. 10, 6', 10', 6", 10", 6"') vers l'installation de réception à programmer (8, 8', 8") en initialisant une fonction de programmation pour l'installation d'émission à transférer (17, 18, 19 ; 6, 10, 6', 10', 6", 10", 6'''; 8, 8', 8") et/ou par l'installation d'émission ou de réception à programmer.
